# EUROPEAN PATENT APPLICATION

(11) **EP 4 644 506 A1**
(43) Date of publication of application: **05.11.2025**
(21) Application number: 23911809.4
(22) Date of filing: 18.12.2023
(51) Int. Cl.: C09K 3/00, B09B 3/70, C02F 1/56, C02F 1/62

(54) **HEAVY METAL TREATMENT AGENT, AND METHOD FOR TREATING WASTEWATER AND INCINERATION ASH USING SAME**

(30) Priority: 27.12.2022 JP 2022209581
(71) Applicant: Miyoshi Oil & Fat Co., Ltd., Tokyo 124-0006 (JP)
(72) Inventor: TERADA Kazuhiro, Iwakura-shi, Aichi 482-8511 (JP); TAKAMATSU Yuichiro, Tokyo 130-0012 (JP); TANAKA Shuya, Tokyo 124-0006 (JP); KAWAI Koji, Tokyo 130-0012 (JP)
(74) Representative: Angerhausen, Christoph
(86) International application number: PCT/JP2023/045214
(87) International publication number: WO 2024/143028

(57) **Abstract**

Provided are: a novel heavy metal treatment agent having improved performance for treating elements of groups 6 to 16 of the periodic table or compounds thereof, including treatment of wastewater and incinerated ash and so forth; and a method for treating wastewater and incinerated ash using the heavy metal treatment agent. This heavy metal treatment agent of the present invention includes the component (A) and at least one species selected from the components (B) to (E) as defined in the following as: (A) at least one dithiocarbamate of one or more amine compounds represented by any of formulae (I) to (III): 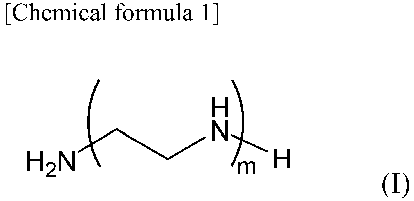 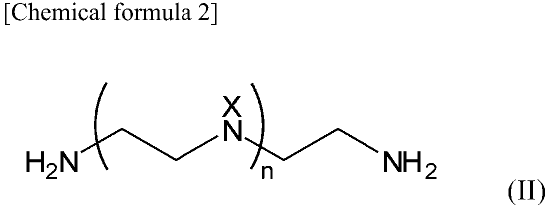 ; and 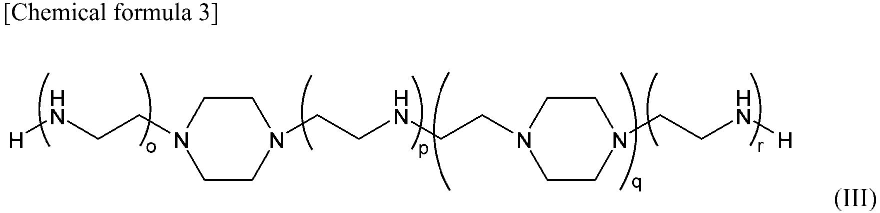 wherein each of the n Xs independently represents a hydrogen atom or a 2-aminoethyl group, and at least one X is a 2-aminoethyl group; (B) a base; (C) at least one species selected from aminocarboxylic acids, mercaptans, and aminophosphoric acids; (D) a dithiocarbamate of polyethyleneimine; and (E) a sulfur-containing compound.

## Description

### Technical Field

The present invention relates to a heavy metal treatment agent.

### Background Art

Various treatments are carried out to separate and collect heavy metals from wastewater, such as those from industrial or factory wastewater to, for example, purify or detoxify water or to reuse these heavy metals.

Conventional methods known for removing metals from, for example, wastewater include, for example, neutralizing coagulation precipitation, ion flotation, ion exchange, electrolytic floatation, electrodialysis, adsorption, and reverse osmosis. However, neutralizing coagulation precipitation presents challenges such as inadequate floc formation and an issue relating to workability that requires the processing of a significant quantity of metallic hydroxide sludge that has been generated, an issue that a metallic ion can be re-eluted from the disposed sludge into, for example, rivers or seawater to thereby cause secondary pollution, and an issue that it is not easy to maintain a wastewater's metallic ion concentration below a predetermined threshold that is set by the nation. Further, ion flotation, ion exchange, electrolytic floatation, electrodialysis, adsorption, and reverse osmosis all pose challenges such as metal removal inefficiency, operational issues, and high running costs. Consequently, in place of these approaches, an approach of collecting and removing the metals in wastewater using a metal scavenger such as an organic chelator has been widely used.

Incinerated ash (such as Fly Ash (FA) and Bottom Ash (BA)) resulting from waste incineration of, for example, municipal and industrial wastes may contain heavy metals that are harmful to the human body. Specifically, the fly ash generated at municipal waste incineration plants during waste incineration contains heavy metals. Leaching of these heavy metals into groundwater, rivers or seawater can cause serious environmental contamination. Therefore, fly ash necessitates mandatory intermediate treatment such as chemical treatment since that is a specially controlled domestic waste. Fly ash containing heavy metals can leak heavy metals after landfilling due to, for example, rainwater. As a result, heavy metals are solidified within the fly ash to decrease elution, which is a typical practice. Chemical treatment is a process that involves the mixing of a chemical agent, water, and fly ash to solidify harmful heavy metals. Examples of such agents used for this purpose include organic chelators such as dithiocarbamate and inorganic agents such as iron compounds.

Dithiocarbamates derived from amine compounds such as ethylenediamine, diethylenetriamine, and piperazine, have traditionally served as heavy metal treatment agents (Metal scavengers) for treating heavy metals in wastewater and incinerated ash (Fly ash and Bottom ash) (Patent documents 1 to 3).

### Prior Art Documents

### Patent documents

Patent document 1: JP-A-2017-154130
Patent document 2: JP-A-2019-026793
Patent document 3: JP-A-6-079254

### Summary of Invention

### Technical Problem

However, in conventional technologies, there remains a need for further improvement in heavy metal treatment capabilities for wastewater and incinerated ash. Particularly in the case of wastewater treatment, there has been a desire to improve heavy metal scavenging efficiency and floc formation capability. Similarly, for incinerated ash treatment, there has been a desire to enhance the reduction of heavy metal elution from the incinerated ash. Additionally, certain conventional dithiocarbamates of amine compounds lack sufficient stability, as they tend to precipitate when mixed with water that contains minerals or the like, and therefore a heavy metal treatment agent, having both heavy metal recovering capability and stability, has been desired.

The present invention has been made in view of these circumstances, and intends to provide: a novel heavy metal treatment agent having improved performance for treating elements of groups 6 to 16 of the periodic table or compounds thereof, including treatment of wastewater and incinerated ash, and being excellent in floc formation capability, in stability when it is mixed with water that contains minerals or the like, and in floc stability; and a method for treating wastewater and incinerated ash using the heavy metal treatment agent.

### Solution to Problem

In order to solve the above problems, the inventions as set forth in the following will be disclosed.
<1> A heavy metal treatment agent comprising
   (A) at least one dithiocarbamate of one or more amine compounds represented by any of formulae (I) to (III) defined as: 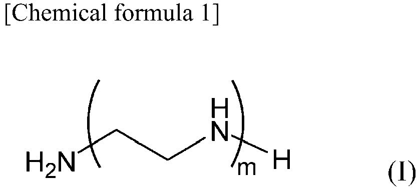
      wherein m represents an integer of 3 to 6; 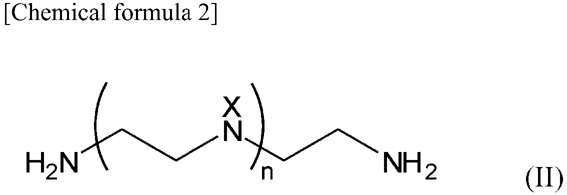
      wherein each of the n Xs independently represents a hydrogen atom or a 2-aminoethyl group, at least one X is a 2-aminoethyl group, n is an integer of 1 to 3 and the total number of nitrogen atoms is 4 to 8; and 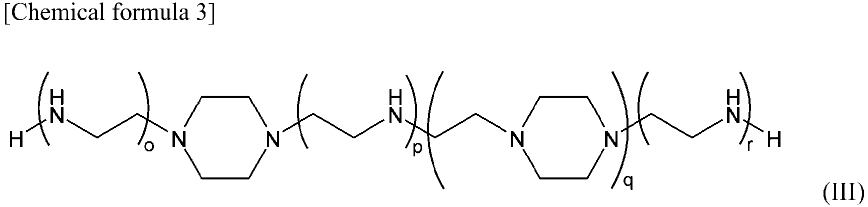
      wherein o is an integer of 0 to 2, p is 0 or 1, q is 0 or 1, r is an integer of 0 to 3, the sum of o, p and r is greater than or equal to 1, and the total number of nitrogen atoms is 3 to 7; and
      at least one species selected from the components (B) to (E) as defined in the following as:
   (B) a base;
   (C) at least one species selected from aminocarboxylic acids, mercaptans, and aminophosphoric acids;
   (D) a dithiocarbamate of polyethyleneimine; and
   (E) a sulfur-containing compound.
<2> The heavy metal treatment agent according to <1>, wherein the one or more amine compounds comprise an amine compound represented by the formula (III).
<3> The heavy metal treatment agent according to <2>, wherein the one or more amine compounds comprise, as an amine compound represented by the formula (III), at least one species selected from amine compounds represented by the following formulae (IIIa), (IIIb) and (IIIc): 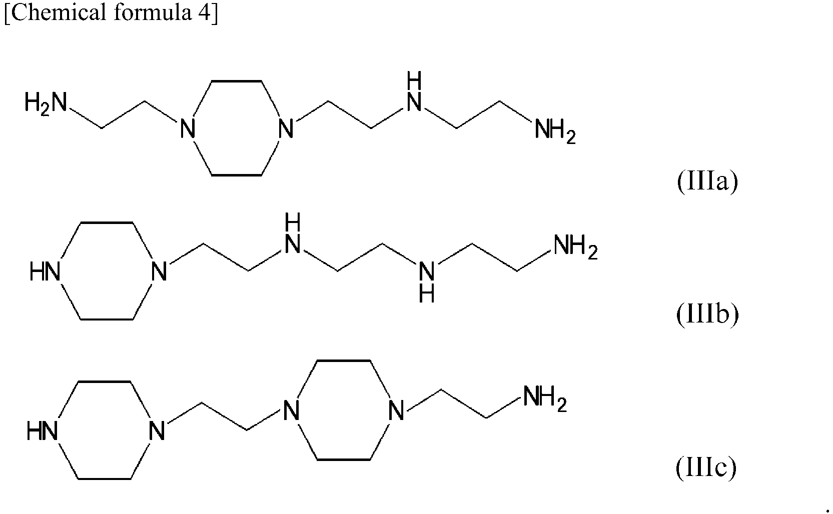
<4> The heavy metal treatment agent according to <3>, wherein the one or more amine compounds comprise, as amine compounds represented by the formula (III), both of the amine compounds represented by the following formulae (IIIa) and (IIIb): 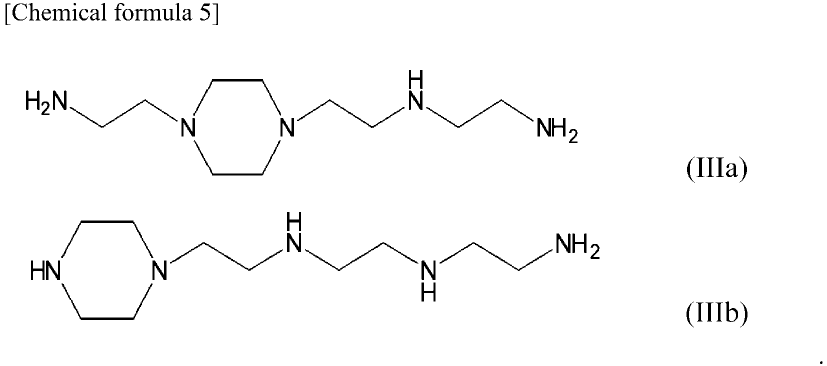
<5> The heavy metal treatment agent according to <4>, wherein the one or more amine compounds further comprise, as an amine compound represented by the formula (III), an amine compound represented by the following formula (IIIc): 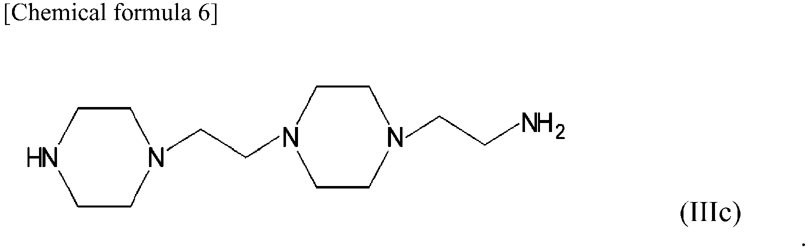
<6> The heavy metal treatment agent according to <1>, wherein the one or more amine compounds comprise all of the amine compounds represented by the formulae (I), (II), and (III).
<7> The heavy metal treatment agent according to <6>, wherein the one or more amine compounds comprise, as amine compounds represented by any of formulae (I) to (III), all of the amine compounds represented by the following formulae (Ia), (IIa), (IIIa) and (IIIb). 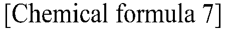 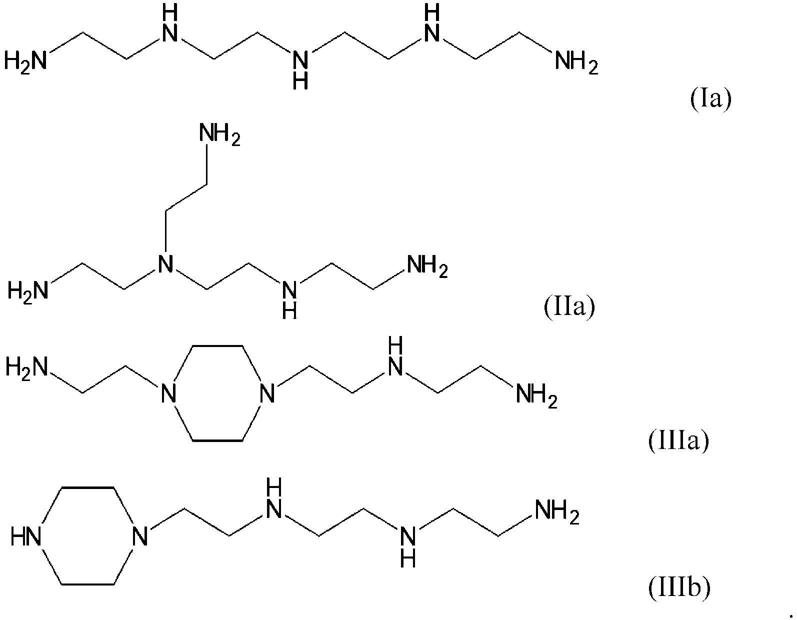
<8> The heavy metal treatment agent according to <7>, wherein the one or more amine compounds further comprise, as an amine compound represented by the formula (III), an amine compound represented by the following formula (IIIc): 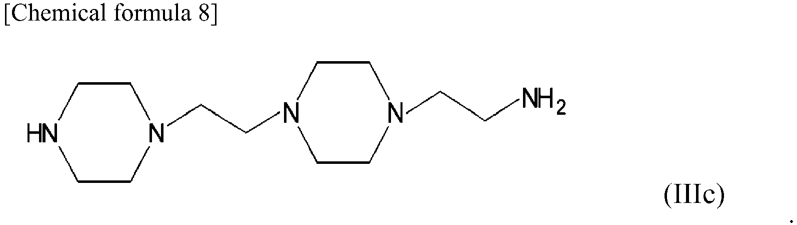
<9> The heavy metal treatment agent according to <1>, wherein the one or more amine compounds comprise an amine compound represented by the formula (III) in an amount of 10.0% or more and 80.0% or less.
<10> The heavy metal treatment agent according to <1>, wherein the one or more amine compounds comprise, as amine compounds represented by the formula (III), both of the amine compounds represented by the following formulae (IIIa) and (IIIb): 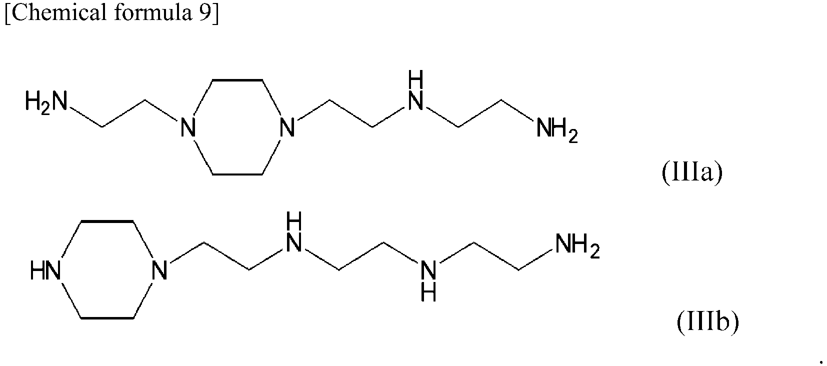 wherein the total amount of the amine compounds represented by the formulae (IIIa) and (IIIb) is 10.0% or more and 50.0% or less.
<11> The heavy metal treatment agent according to <1>, wherein the one or more amine compounds comprise an amine compound represented by the formula (II) in an amount of 5.0% or more and 30.0% or less.
<12> The heavy metal treatment agent according to <1>, wherein the dithiocarbamate is a sodium salt of dithiocarbamic acid.
<13> The heavy metal treatment agent according to <1>, comprising the component (A), the component (B), and the component (C).
<14> The heavy metal treatment agent according to any one of <1> to <13>, wherein the heavy metal treatment agent is for treating elements of groups 6 to 16 of the periodic table or compounds thereof.
<15> A method for treating wastewater containing any one or more elements of groups 6 to 16 of the periodic table or compounds thereof, wherein the method comprises the step of adding the heavy metal treatment agent according to any one of <1> to <13> into a subject water solution.
<16> The method for treating wastewater according to <15>, wherein the method further comprises a step of adding a polymer flocculant and/or an inorganic flocculant into a subject water solution.
<17> A method for treating incinerated ash containing any one or more elements of groups 6, 12, and 14 of the periodic table or compounds thereof, wherein the method comprises the step of adding the heavy metal treatment agent according to any one of <1> to <13> into the incinerated ash.
<18> The method for treating incinerated ash according to <17>, wherein an eluate of the incinerated ash of the experiment as set forth in Japan Environment Agency Notification No. 13 has a pH of 11.5 or more.

### Advantageous Effects of Invention

The heavy metal treatment agent according to the present invention is excellent not only in its capability of treating elements of groups 6 to 16 of the periodic table or compounds thereof, but also in the stability when it is mixed with water containing minerals or the like, and stability in the produced floc as well.

### Description of Embodiments

Specific embodiments of the present invention will be described hereunder.

The heavy metal treatment agent of the present invention comprises the components of:
(A) at least one dithiocarbamate of one or more amine compounds represented by any of formulae (I) to (III); and
   at least one species selected from the components (B) to (E) as defined in the following as:
(B) a base;
(C) at least one species selected from aminocarboxylic acids, mercaptans, and aminophosphoric acids;
(D) a dithiocarbamate of polyethyleneimine; and
(E) a sulfur-containing compound.

The term "amine compound" as used herein refers to an amine compound of the component (A) unless explicitly stated otherwise, except when it pertains to the compound of the component (B).

### (A) Dithiocarbamate of amine compounds

The expression "at least one dithiocarbamate of one or more amine compounds represented by any of formulae (I) to (III)" as used herein refers to a dithiocarbamate that is made of at least one species of amine compounds represented by any of formulae (I) to (III) as the ingredients. The dithiocarbamate is a compound in which a hydrogen atom bonded to a nitrogen atom of an amine compound of the ingredient is substituted by a dithioate.

The amine compound expressed by the formula (I) is linear. In the formula, m represents an integer of 3 to 6. It is preferred that m be 3 to 5, more preferably 3 to 4, and even more preferably 4 in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment. One kind of the amine compounds represented by the formula (I) may be used alone, or two or more kinds thereof may be used in combination.

Examples of the amine compound represented by the formula (I) include, but are not particularly limited to, triethylenetetramine, tetraethylenepentamine, pentaethylenehexamine, and hexaethyleneheptamine. Among them, in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, preferred are triethylenetetramine, tetraethylenepentamine and pentaethylenehexamine, and more preferred are triethylenetetramine and tetraethylenepentamine , and even more preferred is tetraethylenepentamine.

The amine compound represented by the formula (II) is branched. In the formula, each of the n Xs independently represents a hydrogen atom or a 2-aminoethyl group, at least one of them is a 2-aminoethyl group, n is an integer of 1 to 3, and the total number of nitrogen atoms is 4 to 8. It is preferred that n be 1 to 2, and it is more preferred that n be 2 in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment. It is preferred that the total number of nitrogen atoms be 4 to 6, and it is more preferred that the total number of nitrogen atoms be 5. One kind of the amine compound represented by the formula (II) may be used alone, or two or more kinds thereof may be used in combination.

Examples of the amine compound represented by the formula (II) include, but are not particularly limited to, tris(2-aminoethyl)amine, N,N,N'-tris(2-aminoethyl)ethane-1,2-diamine, N,N,N',N'-tetra(2-aminoethyl)ethane-1,2-diamine, N,N-bis-(2-aminoethyl)-N'-[2-[(2-aminoethyl)amino]ethyl]ethane-1,2-diamine, N¹-(2-[(2-aminoethyl)-[2-[(2-aminoethyl)amino]ethyl]amino]ethyl]ethane-1,2-diamine, N,N'-bis-(2-aminoethyl)-N-[2-[bis-(2-aminoethyl)amino]ethyl]ethane-1,2-diamine, and N,N-bis-(2-aminoethyl)-N'-[2-[bis-(2-aminoethyl)amino]ethyl]ethane-1,2-diamine.

Among them, in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, preferred are tris(2-aminoethyl)amine, N,N,N'-tris(2-aminoethyl)ethane-1,2-diamine, and N,N,N',N'-tetra(2-aminoethyl)ethane-1,2-diamine, among which N,N,N'-tris(2-aminoethyl)ethane-1,2-diamine is more preferred.

The amine compound represented by the formula (III) is formed of a combination of cyclic and liner structures. In the formula, o represents an integer of 0 to 2, p is 0 or 1, q is 0 or 1, r represents an integer of 0 to 3, the sum of o, p and r is greater than or equal to 1, and the total number of nitrogen atoms is 3 to 7.

It is preferred that o be 0 or 1, p be 0 or 1, q be 0 or 1, and r be an integer of 0 to 3 in terms of exhibiting excellence in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment. It is more preferred that o be 0 or 1, p be 0, q be 0 or 1 and r be an integer of 0 to 3. It is even more preferred that o be 0 or 1, p be 0, q be 0 and r be an integer of 2 to 3. Meanwhile, it is preferred that the total number of nitrogen atoms be 3 to 6, more preferably be 4 to 5, and even more preferably be 5.

One kind of the amine compound represented by the formula (III) may be used alone, or two or more kinds thereof may be used in combination.

Examples of the amine compound represented by the formula (III) include, but are not particularly limited to, aminoethylpiperazine, piperazine-1,4-diethylamine, N-(2-(1-piperazinyl)ethyl)ethylenediamine, N-[2-[4-(2-aminoethyl)piperazin-1-yl]ethyl]ethane-1,2 - diamine, N-(2-aminoethyl)-N'-[2-(piperazin-1-yl)ethyl]ethane-1,2-diamine, 4-[2-(1-piperazinyl)ethyl]-1-piperazine-ethaneamine, bis(2-(piperazin-1-yl)ethyl)amine, 1-[2-[[2[[2-[(2-aminoethyl)amino]ethyl]amino]ethyl]amino]ethyl]-piperazine, N-[2-[(2-aminoethyl)amino]ethyl]-1,4-piperazine-diethanamine, N,N'-bis(2-aminoethyl)-1,4-piperazine-diethanamine, N-[2-(1-piperazinyl)ethyl]-1,4-piperazine-diethanamine, N-[2-[(2-aminoethyl)amino]ethyl]-1,4-piperazine-diethanamine, N-[2-[(2-aminoethyl)amino]ethyl]-N'-[2-[4-(2-aminoethyl)-piperazin-1-yl]ethyl]ethane-1,2-diamine, and 2-[4-[2-[2-[4-(2-aminoethyl)-piperazin-1-yl]ethylamino]ethyl]-piperazin-1-yl]ethylamine. Among them, in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, preferred are aminoethylpiperazine, piperazine-1,4-diethylamine, N-(2-aminoethyl)-N'-[2-(piperazin-1-yl)ethyl]ethane-1,2-diamine, N-[2-[4-(2-aminoethyl)piperazin-1-yl]ethyl]ethane-1,2-diamine, 4-[2-(1-piperazinyl)ethyl]-1-piperazine-ethaneamine, Bis(2-(piperazin-1-yl)ethyl)amine, 1-[2-[[2[[2-[(2-aminoethyl)amino]ethyl]amino]ethyl]amino]ethyl]-piperazine, N-[2-[(2-aminoethyl)amino]ethyl]-1,4-piperazine-diethanamine, and N-[2-(1-piperazinyl)ethyl]-1,4-piperazine-diethanamine; and more preferred are N-(2-aminoethyl)-N'-[2-(piperazin-1-yl)ethyl]ethane-1,2-diamine, N-[2-[4-(2-aminoethyl)piperazin-1-yl]ethyl]ethane-1,2-diamine, and 4-[2-(1-piperazinyl)ethyl]-1-piperazine-ethanamine, among which N-(2-aminoethyl)-N'-[2-(piperazin-1-yl)ethyl]ethane-1,2-diamine or N-[2-[4-(2-aminoethyl)piperazin-1-yl]ethyl]ethane-1,2-diamine is even more preferred.

In a preferable embodiment, the heavy metal treatment agent of the present invention contains an amine compound represented by the formula (III).

In terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, it is preferred that the agent contains an amine compound represented by the formula (III) that has a combination of linear and cyclic structures in one molecule rather than an amine compound consisting only of linear or cyclic structure, or than a mixture of an amine compound consisting only of a linear structure and an amine compound consisting only of a cyclic structure, respectively, among which it is more preferred that the agent contains an amine compound represented by the formula (III) having two or more cyclic structures in one molecule.

It is preferred that the heavy metal treatment agent contain at least one species selected from the amine compounds represented by the formulae (IIIa), (IIIb), and (IIIc) as the amine compounds of (III).

In this case, it is preferred that the heavy metal treatment agent contain both of the amine compounds represented by the formulae (IIIa) and (IIIb). In this case, it is preferred that the heavy metal treatment agent further contain, as an amine compound represented by the formula (III), an amine compound represented by the formula (IIIc).

In a preferable embodiment, the heavy metal treatment agent of the present invention contains all of the amine compounds represented by the formulae (I), (II), and (III). The heavy metal treatment agent containing all of the amine compounds represented by the formulae (I), (II), and (III) is particularly suitable for treating the elements of groups 6 to 16 of the periodic table or compounds thereof, and in some cases also for enhancing the stability of dithiocarbamate in the heavy metal treatment agent and/or forming flocs or enhancing the stability of the floc in wastewater treatment.

It is preferred that the heavy metal treatment agent contain, as amine compounds represented by any of formulae (I) to (III), all of the amine compounds represented by the formulae (Ia), (IIa), (IIIa) and (IIIb). In this case, it is preferred that the heavy metal treatment agent further contain, as an amine compound represented by the formula (III), a compound represented by the formula (IIIc).

The agent having a structure, containing an amine compound represented by the formula (III) that has a combination of linear and cyclic structures in one molecule, leads to a structure having smaller number of nitrogen atoms that are allowed to introduce dithiocarbamate groups compared to the one represented by the formula (I) having the same number of nitrogen atoms, and therefore having a smaller number of dithiocarbamate groups capable of bonding with heavy metals or the like. Nevertheless, this agent possesses a rigid molecular structure whose molecules are sterically layered through intermolecular forces, thus enabling excellent floc formation capability and making it effective in heavy metal treatment. In this respect, an amine compound represented by the formula (IIIc) and having two cyclic structures in one molecule demonstrates particularly excellent properties and exhibits its effects even when its content in the amine compound is 1.0% or less.

The amount of an amine compound (%) as used herein refers to an area percentage of a peak area of the amine compound over the total sum of the peak areas from which the peak of the solvent used for the analysis of the amine compounds by gas chromatography is subtracted.

An amine compound in an amount of the following range is suitable for treating the elements of groups 6 to 16 of the periodic table or compounds thereof, and in some cases also for enhancing the stability of dithiocarbamate in the heavy metal treatment agent and/or forming flocs in wastewater treatment.

It is preferred that the amount of amine compound represented by the formula (I) be 0.0% or more and 80.0% and less, more preferably 20.0% or more and 80.0% or less, even more preferably 20.0% or more and 55.0% or less, particularly preferably 25.0% or more and 55.0% or less, and more particularly preferably 40.0% or more and 55.0% or less.

It is preferred that the amount of amine compound represented by the formula (II) be 0.0% or more and 50.0% or less, more preferably 5.0% or more and 30.0% or less, even more preferably 5.0% or more and 25.0% or less, particularly preferably 15.0% or more and 25.0% or less, and more particularly preferably 15.0% or more and 20.0% or less.

It is preferred that the amount of amine compound represented by the formula (III) be 10.0% or more and 100.0% or less, more preferably 10.0% or more and 80.0% or less, even more preferably 10.0% or more and 65.0% or less, particularly preferably 20.0% or more and 65.0% or less, more particularly preferably 25.0% or more and 65.0% or less, further preferably 27.0% or more and 65.0% or less, and most preferably 27.0% or more and 45.0% or less.

It is preferred that the amount of amine compound represented by the formula (IIIa) be 0.0% or more and 40.0% or less, more preferably 10.0% or more and 40.0% or less, even more preferably 10.0% or more and 35.0% or less, and particularly preferably 22.0% or more and 30.0% or less.

It is preferred that the amount of amine compound represented by the formula (IIIb) be 0.0% or more and 20.0% or less, more preferably 1.0% or more and 15.0% or less, even more preferably 1.0% or more and 10.0% or less, particularly preferably 6.0% or more and 10.0% or less, and more particularly preferably greater than 6.0% and equal to or less than 10.0%.

It is preferred that the total amount of the amine compounds of the formulae (IIIa) and (IIIb) be 0.0% or more and 50.0% or less, more preferably 10.0% or more and 50.0% or less, even more preferably 13.0% or more and 40.0% or less, particularly preferably 17.0% or more and 40.0% or less, and more particularly preferably 27.0% or more and 40% or less.

It is preferred that the amount of the amine compounds of the formula (IIIc) be 0.0% or more and 1.0% or less, and more preferably greater than or equal to 0.1% and less than 1.0%.

It is preferred that the total amount of the amine compounds of the formulae (IIIa), (IIIb), and (IIIc) be 0.0% or more and 50.0% or less, more preferably 10.0% or more and 50.0% or less, even more preferably 13.0% or more and 40.0% or less, particularly preferably 17.0% or more and 40.0% or less, and more particularly preferably 28.0% or more and 40.0% or less.

The amine compounds represented by the formulae (I) to (III) may be manufactured by a method which is not particularly limited and the method may be any known method, and a cost-effective and simple method is preferred.

In the heavy metal treatment agent of the present invention, examples of the dithiocarbamate include, but are not particularly limited to, a dithiocarbamate obtained by reacting an amine compound(s) represented by any of the formulae (I) to (III), carbon disulfide, and a base of, for example, a metallic hydroxide.

Examples of the dithiocarbamate include, but are not particularly limited to, salts of a dithiocarbamic acid with an alkali metal, an alkaline-earth metal, and an ammonium. Examples of the alkali metal salt include a lithium salt, a sodium salt, and a potassium salt. Examples of the alkaline-earth metal include a magnesium salt and a calcium salt. Among them, an alkali metal salt is preferred, and more preferred are a sodium salt and a potassium salt between which a sodium salt is even more preferred.

In the heavy metal treatment agent of the present invention, no particular limitation will be imposed on a reaction molar ratio of the amine compound of dithiocarbamate, carbon disulfide, and a base of, for example, a metallic hydroxide. The dithiocarbamate is a compound (salt type functional group) in which a salt of dithioic acid group is bonded to a nitrogen atom of the amine compound. It is also preferred that two or more salts of dithioic acid group are introduced per one molecule of the amine compound. One kind of the dithiocarbamate may be used alone, or two or more kinds thereof may be used in combination. It is preferred in respect of enhancing heavy metal treatment capability of, for example, incinerated ash or wastewater treatments that carbon disulfide react with 0.5 to 1 times moles, more preferably 0.7 to 1 times moles, even more preferably 0.8 to 1 times moles, and particularly preferably 0.9 to 1 times moles of nitrogen atom of primary or secondary amino group calculated from the amount of amine compounds obtained from the above-mentioned method.

The method of manufacturing the dithiocarbamate by reacting an amine compound, carbon disulfide, and a base is not particularly limited. For example, an amine compound, and a base of a metallic hydroxide as exemplified in the above as a salt may be dissolved or suspended in a solvent such as water to which carbon disulfide may then be added to make them react for the introduction thereof. The unreacted carbon disulfide may ultimately be removed if necessary. When a product other than dithiocarbamate is produced as a byproduct during a dithiocarbamate production process, carbon disulfide gas or other gases may be generated from, for example, the byproduct during the storage or use of the heavy metal treatment agent. In order to contain the generation of these gases, a preferable embodiment includes the one that involves the use of an excessive amount of amine compound during the process of producing the heavy metal treatment agent to introduce unreacted amine compounds therein or the one that involves the addition of at least one species selected from an amine compound and an amine derivative after manufacturing of the dithiocarbamate.

The heavy metal treatment agent of the present invention may take any dosage form including, for example, a form of solid, liquid or viscous body which is not particularly limited as long as it contains the component (A) and at least one species selected from the components (B) to (E) as defined above. In terms of handleability, it is preferred that the agent be used in the form of a liquid solution.

When the heavy metal treatment agent is used in the form of an aqueous solution, it is preferred in terms of stability of the dithiocarbamates that the content of the component (A) be, although not particularly limited to the following, 20 to 60wt%, more preferably 30 to 50wt% based on the total amount of the heavy metal treatment agent Regarding stability of the solution during the storage of heavy metal treatment agent, the agent containing an amine compound is preferable in terms of preventing crystal formation.

### (B) Base

Examples of the base include, but are not particularly limited to, an alkali metal compound, an alkaline earth metal compound, and an amine compound.

Examples of the alkali metal compound include, but are not particularly limited to, sodium hydroxide, potassium hydroxide, sodium bicarbonate, sodium carbonate, and potassium carbonate. An alkali metal compound contained in the heavy metal treatment agent according to the present invention prevents precipitation of dithiocarbamate in the aqueous solution of the dithiocarbamate (A) at low temperature, inhibits the hydrolysis of dithiocarbamate groups, and inhibits the formation of precipitates (scales) when it is mixed with a mineral-containing water, thereby capable of enhancing the stability of the solution.

Examples of the amine compound include, but are not limited to, ammonia, (mono-, di-, and tri-)methylamine, (mono-, di-, and tri-)ethylamine, ethylenediamine, piperazine, piperidine; amine compounds represented by the formulae (I) to (III), and polyethyleneimine. An amine compound contained in the heavy metal treatment agent according to the present invention can prevent the production of carbon disulfide caused by the decomposition of dithiocarbamates of the amine compounds represented by the formulae (I) to (III), and can inhibit the formation of precipitates (scales), for instance, when it is mixed with a mineral-containing water.

In the aqueous solution, a heavy metal treatment agent containing a base prevents nitrogen atoms of the amine compound (A) from being bonded to the hydrogen ions in water, and allows the nitrogen atoms of the amine compound (A) to be readily bonded to elements of groups 6 to 16 or compounds thereof, which in turns improves heavy metal treating capability, floc forming capability, and stability, thus making it superior in the treating capability of elements of groups 6 to 16 or compounds thereof, and particularly useful in wastewater treatment.

The base contained in the heavy metal treatment agent of the present invention may be, although not limited to the following, in an amount, for example, of 0.01wt% or more and 20wt% or less, preferably of 0.1 to 10wt%, and more preferably of 0.1 to 5wt%, relative to the aqueous solution of the dithiocarbamate (A), in respect of preventing precipitation of dithiocarbamate at low temperature, inhibiting the hydrolysis of dithiocarbamate groups, and inhibiting formation of precipitates (scales) when it is mixed with, for example, a mineral-containing water.

### (C) At least one species selected from aminocarboxylic acids, mercaptans, and aminophosphoric acids

Examples of the aminocarboxylic acids include aminocarboxylic acids and their salts. Examples of aminocarboxylic acids include, but are not limited to, ethylenediaminetetraacetic acid, ethylenediaminetriacetic acid, diethylenetriaminepentaacetic acid, and aminophenoxyethanetetraacetic acid. Examples of salts of aminocarboxylic acids include alkali metal salts, earth metal salts, and amine compound salts of aminocarboxylic acids. Among these, alkali metal salts of aminocarboxylic acids are preferred, with sodium or potassium salts thereof being more preferred, and sodium salts thereof being even more preferred.

Examples of the mercaptans include, but are not particularly limited to, a thiol group-containing compound.

Examples of the aminophosphoric acids include, but are not particularly limited to, a nitrogen atom-containing compound, a phosphate group-containing compound, and salts thereof.

These compounds are effective in ensuring the stability of dithiocarbamate and have effects of inhibiting the hydrolysis of dithiocarbamate groups, and improving the property of inhibiting precipitate formation particularly when an aqueous solution of the dithiocarbamate (A) and water containing, for example, minerals are mixed with each other. In respect of these effects, preferred are aminocarboxylic acids and aminophosphoric acids, among which aminocarboxylic acids are more preferred.

The heavy metal treatment agent according to the present invention may contain the component (C) in an amount of, although not limited to the following, 0.001wt% or more and 10wt% or less, preferably 0.01wt% or more and 1wt% or less.

### (D) Dithiocarbamate of polyethyleneimine

Examples of the dithiocarbamate of polyethyleneimine include a dithiocarbamate of polyethyleneimine having a molecular weight of 200 to 1,000,000. The reaction molar ratio of dithiocarbamic acid groups to each ethyleneimine unit in the polyethyleneimine can be 0.5 to 1.0, with a preferred range of 0.6 to 0.8. Examples of the dithiocarbamate include, but are not particularly limited to, an alkali metal salt, an alkaline earth metal salt, and an ammonium salt of dithiocarbamic acid. Examples of the alkaline metal salt include a lithium salt, a sodium salt, and a potassium salt. Examples of the alkaline earth metal salt include a magnesium salt and a calcium salt. Among these, an alkaline metal salt is preferred, with sodium and potassium salts being more preferred, and a sodium salt being even more preferred.

The dithiocarbamate of polyethyleneimine may contain a halogenated hydrocarbon to improve stability. A mixed product of polyethyleneimine and a halogenated hydrocarbon, or a condensation product of polyethyleneimine and a halogenated hydrocarbon, may be used. Examples of the halogenated hydrocarbon include, but are not particularly limited to, benzyl chloride, and benzyl bromide.

The dithiocarbamate of polyethyleneimine exhibits superior aggregating functionality of flocs formed with entrapped heavy metals or their compounds. Small-sized flocs cannot be collected through filtration in, for example, wastewater treatment when the heavy metal treatment agent is added to wastewater to form the flocs, leading to an issue that the treated water contains residual heavy metals. Small-sized flocs also pose a challenge in treating incinerated ash, as heavy metals may leach out with rainwater from the treated ash formed after adding and mixing the heavy metal treatment agent and water with the fly ash. It demonstrates superior aggregating functionality than a dithiocarbamate of a low molecular amine compound and exhibits enhanced floc-forming capability, particularly in wastewater treatment.

The heavy metal treatment agent of the present invention may contain a dithiocarbamate of polyethyleneimine and be used in combination with the dithiocarbamate (A) of amine compound to thereby enhance the stability against hydrolysis of dithiocarbamate groups, inhibit the formation of precipitates (scales) when, for example, mixed with a mineral-containing water, and improve heavy metal treating capability.

When it is used in combination, the respective contents are not particularly limited but the total amount of the dithiocarbamates (A) of amine compounds may be 5wt% or more and 95wt% or less, preferably 30wt% or more and 80wt% or less, more preferably 50wt% or more and 70wt% or less. The dithiocarbamate (D) of polyethyleneimine may be contained in an amount of 5wt% or more and 95wt% or less, preferably of 10wt% or more and 70wt% or less, and more preferably of 30wt% or more and 50wt% or less.

When the heavy metal treatment agent is used in the form of an aqueous solution, the total amount of the dithiocarbamates (A) of amine compounds and the dithiocarbamate (D) of polyethyleneimine may be 10wt% or more and 50wt% or less, preferably 20wt% or more and 30wt% or less.

### (E) Sulfur-containing compound

Examples of the sulfur-containing compound include, but are not particularly limited to, sulphides such as sodium sulfide, potassium sulfide, sodium hydrosulfide, and sodium polysulfide; thiosulfates such as sodium thiosulfate and potassium thiosulfate and salts thereof; and sulfurous acids and salts thereof such as sodium sulfite.

The sulfur-containing compound contained in the heavy metal treatment agent of the present invention allows for the effective treatment of, for example, heavy metals.

When it is used in combination, the respective contents are not particularly limited but the dithiocarbamates (A) of amine compounds may be in an amount of 5wt% or more and 95wt% or less, preferably of 30wt% or more and 80wt% or less, more preferably of 50wt% or more and 70wt% or less. The sulfur-containing compound may be in an amount of 5wt% or more and 95wt% or less, preferably of 10wt% or more and 70wt% or less, and more preferably of 30wt% or more and 50wt% or less.

When the heavy metal treatment agent is used in the form of an aqueous solution, the total amount of the dithiocarbamates (A) of amine compounds and the sulfur-containing compound (E) may be 10wt% or more and 50wt% or less, preferably of 20wt% or more and 30wt% or less.

The heavy metal treatment agent of the present invention essentially contains the component (A) and at least one species selected from the components (B) to (E), and no particular limitation is imposed on the combination of these components but examples of such combination include the combinations defined as:
a heavy metal treatment agent containing the components (A) and (B);
a heavy metal treatment agent containing the components (A) and (C);
a heavy metal treatment agent containing the components (A) and (D); and
a heavy metal treatment agent containing the components (A) and (E).

It is preferred from the viewpoints of the stability against hydrolysis of dithiocarbamate groups, inhibiting the formation of precipitates (scales) when, for example, it is mixed with a mineral-containing water, and heavy metal treating capability that the heavy metal treatment agent be a heavy metal treatment agent containing the components (A), (B), and (C), more preferably a heavy metal treatment agent containing the components (A), (B), (C), and (D), and even more preferably a heavy metal treatment agent containing the components (A), (B), (D), and (E).

### (Stability against hydrolysis)

The heavy metal treatment agent of the present invention may contain not only the component (A) but also at least one species selected from the components (B) to (E) to thereby inhibit hydrolysis and enhance stability during storage, in use, or when mixed with water. Of these components (B) to (E), preferred is any one of the components (B), (C), and (D), among which the component (B) is more preferred. Any benchmark for the hydrolysis, which is not particularly limited, may be used but it preferably requires, for example, that an aqueous solution containing dithiocarbamate groups in the dithiocarbamate of the amine compound (A) at a content of 5 mg/L demonstrates a reduction rate of the dithiocarbamate groups, after standing at 25°C for 6 hours, of preferably less than 25 wt%, more preferably of less than 10 wt%, even more preferably of less than 5 wt%, and particularly preferably of less than 4 wt%.

### (Scales prevention)

The heavy metal treatment agent according to the present invention may contain not only the component (A) but also at least one species selected from the components (B) to (E) to thereby inhibit production of scales (insoluble product) when it is mixed with water or other additives, thus allowing prevention of equipment malfunction. Scales can sometimes be formed as a result of reactions between dithiocarbamate groups and components such as minerals or metal ions present in water. Of these components (B) to (E), it is preferred in terms of preventing scales that the agent contain any of the components (B), (C), and (D), more preferably any of the components (C) and (D).

The heavy metal treatment agent may contain a further component as long as it does not impair the technical advantage of the present invention. Examples of the further component include, but are not particularly limited to, an amine compound, an amine derivative, an ammonium salt, an organic agent, a reducing agent, an oxidant, an alkali metal hydroxide, a pH adjuster, an inorganic heavy metal treatment agent, a flocculation agent, a rust inhibitor, a scale preventive, an antifoaming agent, a stabilizing agent, a gas containment agent, and a surfactant.

The following is a description of heavy metal treatment using the heavy metal treatment agent of the present invention. The heavy metal treatment agent of the present invention may be mixed with a solid (including a slurry) object, liquid object and/or waste gas object containing the elements of groups 6 to 16 of the periodic table as set forth below or compounds thereof to make it react with these elements or compounds thereof to form a matter insoluble to water to thereby prevent or reduce leaching thereof from the solid object or to separate the insolubilized matter from the liquid object for removing the elements of groups 6 to 16 of the periodic table or compounds thereof. Examples of the solid object include, but are not particularly limited to, incinerated ash (such as Fly Ash (FA) and Bottom Ash (BA)) generated from a waste incineration plant, sludge, slag, earth, and shredder residue; and examples of the liquid object include, but are not particularly limited to, wastewater, waste oil, liquid sludge, and waste gas washing wastewater.

The heavy metal treatment agent of the present invention intends to treat the elements of groups 6 to 16 of the periodic table or compounds thereof.

Examples of the elements belonging to "group 6" include chromium, molybdenum, tungsten, and seaborgium.

Examples of the elements belonging to "group 7" include manganese, technetium, rhenium, and bohrium.

Examples of the elements belonging to "group 8" include iron, ruthenium, osmium, and hassium.

Examples of the elements belonging to "group 9" include cobalt, rhodium, iridium, and meitnerium.

Examples of the elements belonging to "group 10" include nickel, palladium, platinum, and darmstadtium.

Examples of the elements belonging to "group 11" include copper, silver, gold, and roentgenium.

Examples of the elements belonging to "group 12" include zinc, cadmium, mercury, and copernicium.

Examples of the elements belonging to "group 13" include boron, aluminium, gallium, indium, thallium, and nihonium.

Examples of the elements belonging to "group 14" include carbon, silicon, germanium, tin, lead, and flerovium.

Examples of the elements belonging to "group 15" include nitrogen, phosphorus, arsenic, antimony, bismuth, and moscovium.

Examples of the elements belonging to "group 16" include oxygen, sulfur, selenium, tellurium, polonium, and livermorium.

The elements belonging to the same group may likewise be treated by the heavy metal treatment agent of the present invention in the same manner because they have similar characteristics of the outermost electron shells.

Particularly exemplified elements include chromium, molybdenum, and tungsten as elements in group 6; manganese as an element in group 7; iron, ruthenium, and osmium as elements in group 8; cobalt, rhodium, and iridium as elements in group 9; nickel, palladium, and platinum as elements in group 10; copper, silver, and gold as elements in group 11; zinc, cadmium, and mercury as elements in group 12; boron, gallium, and indium, and thallium as elements in group 13; germanium, tin, and lead as elements in group 14; arsenic, antimony, and bismuth as elements in group 15; and selenium and tellurium as elements in group 16. Among them, the agent may suitably treat chromium, manganese, iron, cobalt, nickel, copper, zinc, cadmium, mercury, aluminium, tin, lead, arsenic, and selenium, and compounds thereof. The agent may more suitably treat chromium, manganese, iron, cobalt, nickel, copper, zinc, cadmium, mercury, aluminium, lead, arsenic, and selenium, and the compounds thereof. Among them, the agent may even more suitably treat chromium, manganese, iron, nickel, copper, zinc, cadmium, mercury, lead, arsenic, and selenium, and compounds thereof for which a landfilling standard, an effluent standard or other standards are set.

Examples of the compounds of the above-listed elements include a matter where the above-listed element is bonded to another element via, for example, covalent binding, ion binding or coordination bond, and examples of such include, but are not limited to, for example, an oxidative product, a hydroxide, an oxo acid and the salt thereof, a halide, a complex and a complex salt.

### (Wastewater treatment)

The wastewater treatment using the heavy metal treatment agent of the present invention refers to a separation process of target elements of groups 6 to 16 of the periodic table or compounds thereof from the subject water solution, and examples of which include, but are not particularly limited to, a process of making the heavy metal treatment agent react with the target elements or compounds thereof and separating the resultant insolubilized flocs (aggregates and/or sediments).

The heavy metal treatment agent of the present invention is excellent in floc formation capability, allows easy removal of the flocs, and allows the target elements or compounds thereof to be treated in a convenient manner.

The wastewater treatment using the heavy metal treatment agent may be performed by adding the heavy metal treatment agent into the subject water solution. The subject water solution as used herein refers to a water solution that contains the subject elements or compounds thereof, and the term also encompasses such solution before or after adding the heavy metal treatment agent.

The subject water solution containing untargeted elements or compounds can also be treated favourably. The subject water solution can be treated favourably even if it contains, for example, complexing agents including EDTA, organic acids such as citric acid, phosphoric acid compounds, amine compounds and cyanide compounds, oxidants, reducing agents, surfactants, salts, and organic and inorganic compounds although they are not particularly limited.

The treatment after the addition may be carried out under the condition of, for example, stirring or allowing it to standstill which is also not particularly limited. The insoluble matters or solids after the treatment may be separated for removal. The manner of removing the insoluble matters or solids is not particularly limited but includes a method of, for example, filtering, centrifugating, and settling down the solids, and then separating them from the supernatant solution.

There may be used any equipment or operations for agitation which are not particularly limited, and conventionally known equipment and operations can be used. No special equipment needs to be used for allowing it to standstill, and a sedimentation separation tank, for example, may be installed to perform the solid-liquid separation.

In the treatment using the heavy metal treatment agent of the present invention, into the subject water solution may be added not only the heavy metal treatment agent but also a further component such as a pH adjuster, a flocculation agent, an alkali metal hydroxide, an inorganic heavy metal treatment agent, a rust inhibitor, a scale preventive, an antifoaming agent, an adsorbent, a surfactant, a complexing agent, a chelating agent an oxidant, and a reducing agent. The pH adjuster may be added therein to perform the treatment in a suitable pH region to thereby prevent the decomposition of the heavy metal treatment agent and promote the formation of flocs, which allows the elements of groups 6 to 16 of the periodic table or compounds thereof to be suitably treated.

Examples of the pH adjuster include, but are not particularly limited to, inorganic acids such as sulfuric acid, hydrochloric acid, and nitric acid, and inorganic alkalis such as sodium hydroxide, potassium hydroxide, and calcium hydroxide. The following flocculants may also be used as pH adjusters.

The addition of a flocculant on top of adding the heavy metal treatment agent improves the sedimentation properties of the flocs.

The flocculant may be added as necessary and stirred to separate the resultant flocs. This process removes the intended elements or compounds thereof contained in the wastewater.

Examples of the flocculant include, but are not particularly limited to, a polymer flocculant, an inorganic flocculant, and minerals among which a polymer flocculant and an inorganic flocculant are preferred, and a polymer flocculant is more preferred.

Anionic, cationic, non-ionic, and ampholytic polymer flocculants may be used as polymer flocculants, and examples of which include, but are not particularly limited to, anionic flocculants such as flocculants of polyacrylamide, sodium polyacrylate, polyacrylic acid, and naturally derived flocculants; cationic flocculants such as flocculants of polymethacrylic ester, polyacrylic ester, polyamine, poly dadmac, and dicyandiamide; non-ionic flocculants such as flocculants of polyacrylamide, polyethylene glycol, and polyvinyl alcohol; and ampholytic flocculants such as flocculants of polyacrylic ester/ acrylic acid copolymer. Specific examples of them include sodium polyacrylate, sodium alginate, a copolymer of acrylamide and sodium acrylate, a copolymer of acrylamide and sodium acrylamide-2-methylpropanesulfonate (AMPS), a copolymer of acrylamide/acrylic acid/AMPS, polydimethylaminoethyl (meth)acrylate quaternary salt, a copolymer of dimethylaminoethyl (meth)acrylate quaternary salt and acrylamide, polydimethyldiallylammonium chloride, a copolymer of dimethyldiallylammonium chloride and acrylamide, polyamidine, epichlorohydrin-dimethylamine condensation products, polycondensation products of dicyandiamide, ammonium chloride and formaldehyde, polyacrylamide, polyethylene oxide, a copolymer of dimethylaminoethyl (meth)acrylate quaternary salt and acrylic acid, and Hofman degradation products of polyacrylamide. Among them, preferred are anionic and cationic flocculants, and an anionic flocculant is more preferred. Among the anionic flocculant, sodium polyacrylate, and a copolymer of acrylamide and sodium acrylate are more preferred. Among the cationic flocculant, a copolymer of dimethyldiallylammonium chloride and acrylamide is more preferred.

Examples of the inorganic flocculant include, but are not particularly limited to, an iron-based inorganic flocculant (such as ferric chloride, ferrous chloride, ferric sulfate, ferrous sulfate, and poly ferric sulfate), an aluminium-based inorganic flocculant (such as aluminium sulfate, polyaluminum chloride, aluminum chloride) and an alkaline inorganic flocculant (such as calcium chloride, magnesium hydroxide, potassium aluminate). Among them, preferred are an iron-based inorganic flocculant and an aluminium-based inorganic flocculant, among which more preferred are ferric chloride, ferrous sulfate, poly ferric sulfate, aluminium sulfate, polyaluminum chloride, and calcium chloride, and even more preferred are ferric chloride, ferrous sulfate, poly ferric sulfate, aluminium sulfate, and polyaluminum chloride.

One kind of the above-listed flocculants may be used alone, or two or more kinds of them may be used in combination.

Examples of the mineral include, but are not particularly limited to, carbonate minerals such as hydrotalcite, magnesite, and limestone; silicate minerals such as zeolite, montmorillonite, kaolin, bentonite, and silica; oxide minerals such as alumina; sulfate minerals such as gypsum; and phosphate minerals such as hydroxyapatite.

One kind of flocculant may be used alone, or two or more kinds thereof may be used in combination, and the number of uses may be once or two or more times. It is a preferable embodiment to use inorganic and polymer flocculants in combination. The combined usage of the inorganic and polymer flocculants can preferably treat the elements of groups 6, 10, 11, 12, 14, 15, and 16 or compound thereof among the elements of groups 6 to 16 or compound thereof as listed above.

### (Incinerated ash treatment)

The incinerated ash treatment using the heavy metal treatment agent of the present invention is intended for the treatment of incinerated ash (fly ash and bottom ash) generated from combustion plants such as incinerators or melting furnaces of, for example, municipal wastes, industrial wastes, sludge, biomass boiler, paper sludge, coal, and solidified waste fuel (RDF: Refuse Derived Fuel; or RPF: Refuse derived paper and plastics densified Fuel) and/or incinerated ash (fly ash and bottom ash) generated from combustion plants such as an electric furnace for iron and steel manufacturing, a roasting furnace for metal smelting, a sintering furnace, a calcination furnace, a blast furnace, a converter furnace, a melting furnace and a drying furnace, and the incinerated ash treatment is intended not only for the treatment of incinerated ash but also for the treatment of earth, sludge, and slag which contain an element of groups 6 to 16 of the periodic table or a compound thereof.

The term "incinerated ash" as used herein refers to a bottom ash (BA) which is a residue of combustion from an incinerator and to a fly ash (FA) which flies together with the flue gases generated by incineration. The fly ash also includes a fly ash (from an ash melting furnace) that is produced by a melting process. Further, the fly ash may contain an exhaust gas treatment agent of other types such as lime hydrate or activated charcoal. This term is not particularly used to distinguish one from the other, and the term "incinerated ash" as expressed hereunder is not intended to distinguish the bottom ash from the fly ash.

It is preferred that the dosage of the heavy metal treatment agent of the present invention in terms of additive rate to the incinerated ash be 0.01wt% or more, more preferably 0.1wt% or more, even more preferably 0.5wt% or more, and particularly preferably 1wt% or more. It is also preferred that the dosage be 30wt% or less, more preferably 20wt% or less, even more preferably 15wt% or less, and particularly preferably 10wt% or less. The dosage within these ranges is suitable for obtaining the technical advantage of the invention. Excessive use of the heavy metal treatment agent may risk the re-elution of heavy metals that have been insolubilized by dithiocarbamate.

The heavy metal treatment agent may preferably treat incinerated ash that contains at least any one or more of the elements of groups 6, 12, and 14 or compounds thereof among the elements of groups 6 to 16 or compounds thereof.

In respect of reaction efficiency between heavy metals and dithiocarbamate contained in the heavy metal treatment agent of the present invention, when the treatment ash is in a dry powder state, heavy metal ions and dithiocarbamate cannot be smoothly moved, and the frequency of contact therebetween is decreased to thereby thwart the sufficient progress of the reaction. Treatment ash in a liquid state may be uneconomical because it necessitates a dewatering process or results in an excessive amount of water content for transporting the treatment ash. For this reason, in order to treat the heavy metals in a proper manner, it is preferred that an optimum amount of water be added thereto to turn it into an aggregated, slurry or powder state having an optimum content of water, and the one having an aggregated state is more preferred. The additive rate of water is not particularly limited, and the additive rate thereof over the incinerated ash is preferably 5wt% or more, more preferably 10wt% or more, even more preferably 15wt% or more, and particularly preferably 20wt% or more. The additive rate thereof over the incinerated ash is 150wt% or less, preferably 100wt% or less, more preferably 80wt% or less, even more preferably 60wt% or less, and particularly preferably 40wt% or less. The additive rate as large as or larger than a predetermined amount allows the dithiocarbamate to efficiently contact the heavy metals in the incinerated ash, which thereby facilitates the formation of the insolubilized matter. An excessive additive rate of water results in a slurry or liquid state rather than the aggregated state, which makes the handling (such as transportation) of the treatment ash to be cumbersome.

When the heavy metal treatment agent of the present invention and water are mixed with incinerated ash, the heavy metal treatment agent and water may be simultaneously added into the incinerated ash or they may be separately added thereinto. Alternatively, the heavy metal treatment agent and water may be mixed beforehand, after which the mixture may be added to the incinerated ash; that is, the heavy metal treatment agent, water, and the incinerated ash may be added or mixed in any order.

The heavy metal treatment agent of the present invention can treat any basic, acidic, and neutral incinerated ashes, among which the agent can preferably treat basic and neutral ashes between which a basic ash can more preferably be treated. The acidity or basicity of incinerated ash can be based on the pH of an eluate of the incinerated ash. In this respect, the heavy metal treatment agent of the present invention can treat an incinerated ash whose pH for the eluate (sample solution) in accordance with the method as set forth in the Japanese environment agency notification No. 13 is preferably 6 or more, more preferably 9 or more, even more preferably 11.5 or more and particularly preferably 12 or more. A basic or acidic compound, a pH adjuster or other agents may be added to the incinerated ash for treating the incinerated ash to control pH of the eluate.

As to the incinerated ash treatment using the heavy metal treatment agent of the present invention, there may be used a further component together with the heavy metal treatment agent and water as long as it does not impair its technical advantage. Examples of such further component include, but are not particularly limited to, a flocculation agent, a pH adjuster, a rust inhibitor, a reducing agent, an oxidant, a surfactant, an adsorbent, an alkali metal hydroxide, a cement and a liquid glass.

When the incinerated ash is treated with the heavy metal treatment agent, there may be performed, for example, a post processing after the mixture with water or other agents. The post processing is performed while stirring or allowing it to standstill to thereby prevent the leaching of the heavy metals in a stable manner. The fly ash generated during incineration in an incinerator is transported, together with the exhaustive gas, to a bag filter with separate walls, a circulating electrostatic precipitator or a cyclone to be collected there. The collected fly ash is stored in, for example, a silo and then transported to a batch-type or continuous mixer to which the heavy metal treatment agent and water are added and uniformly mixed. The mixture discharged from the mixer is conveyed by a conveyer and transported to a pit. Post processing of the mixture may be carried out in an indoor installation such as on a conveyer or in a pit where the mixture discharged from the mixer is conveyed or stored within doors, or in a storage enclosure such as a container.

The bottom ash (BA) generated during incineration in an incinerator has a high temperature when the ash is discharged from the incinerator, and therefore the ash is normally put into a water tank to be cooled. Examples of the method of insolubilizing the bottom ash include a method of adding the heavy metal treatment agent of the present invention into a water tank to make them react in the water tank for insolubilization and a method of adding the heavy metal treatment agent and water into the dewatered bottom ash directly or after subjecting the ash in a pulverization processing, and then stirring and mixing them for insolubilization. The post processing of the insolubilized bottom ash may be carried out in an indoor installation such as on a conveyer or in a pit where it is conveyed or stored within doors, or in a storage enclosure such as a container as is the case for the fly ash.

The present invention has thus far been described based on the embodiments thereof; however, the invention shall not be limited to these embodiments and may be variously modified without departing from the scope of the gist of the present invention.

### Examples

The present invention will be described in greater detail hereunder with reference to working examples; the invention shall not be limited to the following working examples.

### <Amine compound>

As for the amine components, reagents that are commonly distributed and commercially available were used. Carbon disulfide and sodium hydroxide manufactured by KANTO CHEMICAL CO., INC. were used.

The quantities of amine compounds were analysed by gas chromatography (GC) using samples in which an amine compound(s) was/were dissolved in a solvent (methanol). The analysis was performed using the GC of a model GC-2010 Plus (manufactured by SHIMADZU CORPORATION) and a capillary column TC-1 (length 15m, inner diameter 0.25mm, film thickness of liquid phase 0.25µm)(GL Sciences Inc.) with the following conditions:
• SPL (Vaporization Chamber)

| | | | |
|---|---|---|---|
| Temperature: | 300°C | Total Flow Rate: | 45.1 ml/min. |
| Pressure: | 48.9 Kpa | Column Flow Rate: | 1.03 ml/min. |
| Carrier Gas: | Helium | Linear Velocity : | 30.2 cm/sec. |
| Split Ratio : | 40.0 | Purge Flow Rate: | 3.0 mL/min. |

• Heat-up condition

| | | | | | |
|---|---|---|---|---|---|
| Set temperature: | 50°C; | hold time: | 3min. | | |
| Ramp rate: | 10.0°C/min.; | Set temperature: | 160°C | | |
| Ramp rate: | 20.0°C/min.; | Set temperature: | 300°C; | Hold time: | 10 min. |

• FID (Detector)

| | |
|---|---|
| Temperature: | 300°C |
| Makeup gas: | Helium |
| Makeup flow rate: | 30.0 mL/min. |
| H₂ flow rate: | 40.0 mL/min. |
| Air flow rate: | 400.0 mL/min. |

Note that the amount of each amine compound (%) indicates an area rate (area percentage) of a peak area in the GC chart of the amine compound over the total sum of the peak areas of the amine compounds from which the peak of the solvent used for the analysis is subtracted.

As for the tetraethylenepentamine to be described below, a commercially available product (a mixture of a linear compound, a branched compound, and a combined compound of cyclic and linear structures) that is commonly distributed and is an industry product was used. The above-mentioned analysis showed that this tetraethylenepentamine had 48.2% of amine compound of formula (Ia) that is linear, 18.3% of amine compound of formula (IIa) that is branched, and 32.7% of amine compound of formula (III) that is a combination of cyclic and linear structures (in which the amine compound is made up of: formula (IIIa) 25.5%; formula (IIIb) 6.4%; and formula (IIIc) 0.8%).

### [Heavy metal treatment agent]

The formulations as indicated in Table 1 were used to prepare heavy metal treatment agents 1 to 14 as outlined below:

### •Heavy metal treatment agent 1

100 g of the heavy metal treatment agent 11 defined below as the component (A) and 1.0 g of a 48.0% sodium hydroxide aqueous solution as the component (B) were dissolved therein to obtain a heavy metal treatment agent 1.

### •Heavy metal treatment agent 2

100 g of the heavy metal treatment agent 12 defined below as the component (A) and 1.0 g of a 48.0% sodium hydroxide aqueous solution as the component (B) were dissolved therein to obtain a heavy metal treatment agent 2.

### •Heavy metal treatment agent 3

100 g of the heavy metal treatment agent 13 defined below as the component (A) and 1.0 g of a 48.0% sodium hydroxide aqueous solution as the component (B) were dissolved therein to obtain a heavy metal treatment agent 3.

### •Heavy metal treatment agent 4

100 g of the heavy metal treatment agent 14 defined below as the component (A) and 1.0 g of a 48.0% sodium hydroxide aqueous solution as the component (B) were dissolved therein to obtain a heavy metal treatment agent 4.

### •Heavy metal treatment agent 5

100 g of the heavy metal treatment agent 11 defined below as the component (A) and 0.1 g of a 40% tetrasodium ethylenediaminetetraacetate (EDTA-4Na) aqueous solution as the component (C) were dissolved therein to obtain a heavy metal treatment agent 5.

### •Heavy metal treatment agent 6

100 g of the heavy metal treatment agent 12 defined below as the component (A) and 0.1 g of a 40% tetrasodium ethylenediaminetetraacetate (EDTA-4Na) aqueous solution as the component (C) were dissolved therein to obtain a heavy metal treatment agent 6.

### •Heavy metal treatment agent 7

37.5 g of the heavy metal treatment agent 12 defined below as the component (A); 12.5 g of ion-exchange water; and 50 g of dithiocarbamate (20 wt% aqueous solution), as the component (D) and obtained by reacting 26 g of polyethylenimine (Commercial product: Average molecular weight of 70,000), 9.5 g of carbon disulfide, and 10.4 g of a 48.0% sodium hydroxide aqueous solution in 54.1 g of ion-exchange water, were mixed to obtain a heavy metal treatment agent 7.

### •Heavy metal treatment agent 8

37.5 g of the heavy metal treatment agent 12 defined below as the component (A), 14.3 g of sodium hydrosulfide product (NaHS: 70% product) (manufactured by NAGAO co., ltd.) as the component (E), and 48.2 g of ion-exchange water were mixed to obtain a heavy metal treatment agent 8.

### •Heavy metal treatment agent 9

37.5 g of the heavy metal treatment agent 12 defined below as the component (A), 30.8 g of sodium sulfide (Na₂S) nonahydrate (manufactured by KANTO CHEMICAL CO., INC.) as the component (E), and 31.7 g of ion-exchange water were mixed to obtain a heavy metal treatment agent 9.

### •Heavy metal treatment agent 10

100 g of the heavy metal treatment agent 12 defined below as the component (A), 1.0 g of a 48.0% sodium hydroxide aqueous solution as the component (B), and 0.1 g of a 40% EDTA-4Na aqueous solution as the component (C) were dissolved therein to obtain a heavy metal treatment agent 10.

### •Heavy metal treatment agent 11

A dithiocarbamate (40wt% aqueous solution) prepared by reacting 15.9g of N-(2-aminoethyl)piperazine (manufactured by Tokyo Chemical Industry Co., Ltd), 18.7g of carbon disulfide and 20.5g of a 48.0% sodium hydroxide aqueous solution in 44.9g of ion-exchange water was used as the component (A) (1 times moles of carbon disulfide per nitrogen atom of the primary or secondary amino group of the amine compound). The N-(2-aminoethyl)piperazine was of 100.0 % amine compound of formula (III) which is a combination of cyclic and linear structures.

### •Heavy metal treatment agent 12

A dithiocarbamate (40wt% aqueous solution) prepared by reacting 13.0g of tetraethylenepentamine (a marketed product which is a mixture of a linear compound, a branched compound, and a combined compound of cyclic and linear structures), 20.9g of carbon disulfide and 22.9g of a 48.0% sodium hydroxide aqueous solution in 43.2g of ion-exchange water was used as the component (A) (1 times moles of carbon disulfide per nitrogen atom of primary or secondary amino group calculated from the amount of the amine compound obtained from the above-described GC analysis method).

### •Heavy metal treatment agent 13

A dithiocarbamate (40wt% aqueous solution) prepared by reacting 5.3g of N-(2-aminoethyl)piperazine (manufactured by Tokyo Chemical Industry Co., Ltd), 8.7g of tetraethylenepentamine (a marketed product which is a mixture of a linear compound, a branched compound, and a combined compound of cyclic and linear structures), 20.2g of carbon disulfide and 22.1g of a 48.0% sodium hydroxide aqueous solution in 43.7g of ion-exchange water was used as the component (A) (1 times moles of carbon disulfide per nitrogen atom of primary or secondary amino group calculated from the amount of the amine compound obtained from the above-described GC analysis method). The amount of amine compounds was 32.1% of amine compound of formula (Ia) which is linear, 12.2% of amine compound of formula (IIa) which is branched, and 55.2% of amine compound of formula (III) which is a combination of cyclic and linear structures (in which the amine compound is made up of: formula (IIIa) 17.0%, formula (IIIb) 4.3%, formula (IIIc) 0.6% and N-(2-aminoethyl)piperazine 33.3%).

### •Heavy metal treatment agent 14

A dithiocarbamate (40wt% aqueous solution) prepared by reacting 2.2g of triethylenetetramine (Sigma-Aldrich Japan K.K.), 10.4g of tetraethylenepentamine (a marketed product which is a mixture of a linear compound, a branched compound, and a combined compound of cyclic and linear structures), 21.2g of carbon disulfide and 23.4g of a 48.0% sodium hydroxide aqueous solution in 42.8g of ion-exchange water was used as the component (A) (1 times moles of carbon disulfide per nitrogen atom of primary or secondary amino group calculated from the amount of the amine compound obtained from the above-described GC analysis method). The amount of amine compounds was 58.6% of the amine compound of formula (I) that is linear (in which the amine compound is made up of: formula (Ia) 38.6% and triethylenetetramine 20.0%), 14.6% of the amine compound of formula (IIa) that is branched, and 26.2% of the amine compound of formula (III) that is a combination of cyclic and linear structures (in which the amine compound is made up of: formula (IIIa) 20.4%, formula (IIIb) 5.1% and formula (IIIc) 0.7%).

**[Table 1]**

| Heavy metal treatment agent (wt.%) | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Component (A) | 40 | 40 | 40 | 40 | 40 | 40 | 15 | 15 | 15 | 40 | 40 | 40 | 40 | 40 |
| Component (B) | NaOH 0.5 | NaOH 0.5 | NaOH 0.5 | NaOH 0.5 | - | - | - | - | - | NaOH 0.5 | - | - | - | - |
| Component (C) | - | - | - | - | EDTA-4Na 0.04 | EDTA-4Na 0.04 | - | - | - | EDTA-4Na 0.04 | - | - | - | - |
| Component (D) | - | - | - | - | - | - | 10 | - | - | - | - | - | - | - |
| Component (E) | - | - | - | - | - | - | - | NaHS 10 | - | - | - | - | - | - |
| | - | - | - | - | - | - | - | - | Na₂S 10 | - | - | - | - | - |
| Water | 60 | 60 | 60 | 60 | 60 | 60 | 75 | 75 | 75 | 60 | 60 | 60 | 60 | 60 |

### (Stability test against hydrolytic degradation)

The heavy metal treatment agents as indicated in Table 2 were subjected to a stability test against hydrolytic degradation in a manner as shown below. The agents were diluted with ion-exchange water such that the agents contained dithiocarbamate groups in the dithiocarbamate (A) in an amount of 5 mg/L to prepare test samples. A UV-Vis spectrophotometer (UH4510 manufactured by Hitachi High-Tech Corporation) was used to measure the light absorbances of the test samples of those immediately after being diluted and those after being left to stand at 25°C for 6 hours. The reduction rates of dithiocarbamate groups were determined from the absorbance of light at 286 nm for those corresponding to the absorbances of the dithiocarbamate groups before and after the standing period. Agents exhibiting lower reduction rates demonstrate greater stability against hydrolytic degradation.

**[Table 2]**

| | Working example | | | | | | | | | Comparative example |
|---|---|---|---|---|---|---|---|---|---|---|
| | 1 | 2 | 3 | 4 | 5 | 6 | 7 | 8 | 9 | 1 |
| Heavy metal treatment agent | 1 | 2 | 3 | 4 | 6 | 7 | 8 | 9 | 10 | 12 |
| Reduction rate (wt.%) of dithiocarbamate groups after being left to stand at 25°C for 6 hours | 13.3 | 2.6 | 4.5 | 7.8 | 9.4 | 9.7 | 10.8 | 22.0 | 2.2 | 27.3 |

As shown in Table 2, the heavy metal treatment agents according to the present invention exhibited lower reduction rates in absorbency of light at 286 nm compared to the one of the comparative example, and demonstrated superior stability against hydrolytic degradation. Among these examples, comparing Example 1 with Example 2, it was demonstrated that a use of tetraethylenepentamine (a mixture of a linear compound, a branched compound, and a combined compound of cyclic and linear structures) as the component (A) results in an agent having superior stability against hydrolytic degradation.

Comparing Working Examples 2 to 4 with Working Example 1, Working Examples 2 to 4 exhibited lower reduction rates in absorbency of light at 286 nm, and showed superior stability against hydrolytic degradation when the dithiocarbamate contains any one or more amine compounds of the formulae (IIIa), (IIIb) and (IIIc), particularly when the compounds have not only those of the formulae (IIIa) and (IIIb) but also that of formula (IIIc); or when the dithiocarbamate contains any one or more amine compounds of the formulae (I), (II) and (III), particularly when the amine compounds have not only the formulae (Ia), (IIa), (IIIa) and (IIIb) but also the formula (IIIc).

Comparing Working Examples 2 and 3 with Working Example 4, Working Examples 2 and 3 exhibited lower reduction rates in the absorbency of light at 286 nm, showing a tendency that the agents having 27.0 to 65.0% of amine compound of formula (III) in the mixed system of the formulae (I) to (III) result in superior stability against hydrolytic degradation.

Further, comparing Working Example 2 with Working Example 3, Working Example 2 exhibited a lower reduction rate in the absorbency of light at 286 nm, and indicated superior stability against hydrolytic degradation when the amount of amine compound of the formula (III) is 27.0% or more and 45.0% or less, or when the total amount of amine compounds of the formulae (IIIa) and (IIIb) is 27.0% or more and 40% or less.

Comparing Working Examples 2, and 5 to 8 from each other, it was shown that a use of the base (B), the aminocarboxylic acid (C), or the dithiocarbamate of polyethyleneimine (D) as an additive resulted in more superior stability against hydrolytic degradation. Comparing Working Examples 2, 5, and 10 from each other, it was shown that a heavy metal treatment agent containing the components (A), (B), and (C) resulted in even more superior stability against hydrolytic degradation.

From these results, it was indicated that the heavy metal treatment agent according to the present invention inhibits decomposition of dithiocarbamate groups through hydrolysis during storage, in use, or when mixed with water, and is capable of preventing deterioration in heavy metal treating capability.

### (Scale prevention test)

The heavy metal treatment agent was diluted with tap water (water hardness: 78) to a concentration of 10 wt%. The solution was left to stand at 25°C, and precipitation of precipitates (scales) was visually observed over time. The symbol ∘ was assigned when no scale precipitation was detected, while the symbol × was assigned when precipitation was observed.

**[Table 3]**

| | Working example | | | | | | | Comparative example |
|---|---|---|---|---|---|---|---|---|
| | 10 | 11 | 12 | 13 | 14 | 15 | 16 | 2 |
| Heavy metal treatment agent | 2 | 5 | 6 | 7 | 8 | 9 | 10 | 12 |
| Immediately afterwards | ○ | ○ | ○ | ○ | ○ | ○ | ○ | ○ |
| After 1 day | ○ | ○ | ○ | ○ | ○ | ○ | ○ | × |
| After 2 days | ○ | ○ | ○ | ○ | × | × | ○ | × |
| After 5 days | × | ○ | ○ | ○ | × | × | ○ | × |
| After 7 days | × | ○ | ○ | × | × | × | ○ | × |
| After 10 days | × | × | ○ | × | × | × | ○ | × |

As shown in Table 3, in Comparative Example 2, precipitation of precipitates was observed after one day, but in Working Examples 10 to 16, no precipitation of precipitates was observed for one day or longer, thus showing superiority in scale prevention capability of the heavy metal treatment agent according to the present invention. Of the working examples, comparing Working Examples 11 and 12 that contain (C) aminocarboxylic acids, no precipitation of precipitates was observed after 10 days in Working Example 12, which demonstrates superior stability of an agent that contains tetraethylenepentamine (a mixture of a linear compound, a branched compound and a combined compound of cyclic and linear structures) as the component (A) and superior scale preventing capability of an agent that contains a dithiocarbamate of amine compound having any one or more formulae (IIIa), (IIIb) and (IIIc), particularly dithiocarbamates of amine compounds having not only formulae (IIIa) and (IIIb) but also formula (IIIc) or of an agent that contains a dithiocarbamate of amine compound having any one or more formulae (I), (II) and (III), particularly dithiocarbamates of amine compounds having not only formulae (Ia), (IIa), (IIIa) and (IIIb) but also formula (IIIc).

Comparing Working Examples 10, 12, and 16 from each other, it was indicated that a heavy metal treatment agent containing the components (A), (B), and (C) exhibits superiority in both scale prevention capability and stability against hydrolytic degradation.

### (Wastewater treatment test)

The following reagents were used to prepare test solutions to be treated. Hydrochloric acid solution or sodium hydroxide solution was used for pH adjustment during the preparation of the test solution.
Chromium (III) chloride hexahydrate (manufactured by KANTO CHEMICAL CO.) Manganese (II) chloride tetrahydrate (manufactured by KANTO CHEMICAL CO.)
Cobalt (II) chloride hexahydrate (manufactured by FUJIFILM Wako Pure Chemical Corporation)
Iron (III) chloride hexahydrate (manufactured by KANTO CHEMICAL CO.)
Copper (II) chloride dihydrate (manufactured by KOKUSAN CHEMICAL Co., Ltd.)
Zinc chloride (II) (manufactured by KOKUSAN CHEMICAL Co., Ltd)
Aluminum sulfate 14-18 Water (manufactured by FUJIFILM Wako Pure Chemical Corporation)
Cadmium (II) chloride (manufactured by FUJIFILM Wako Pure Chemical Corporation)
Lead chloride (II) (manufactured by KANTO CHEMICAL CO.)
Mercury chloride (II) (manufactured by KANTO CHEMICAL CO.)
Arsenic oxide (III) (manufactured by KANTO CHEMICAL CO.)
Sodium selenite (manufactured by FUJIFILM Wako Pure Chemical Corporation)
In addition, the following flocculants were used.
Aluminium sulfate aqueous solution (manufactured by TAIMEI CHEMICALS Co.,Ltd)
38% ferric chloride aqueous solution (manufactured by Hayashi Pure Chemical Ind., Ltd.)
Polymer flocculant (Anionic polymer flocculant: Miyo-floc AP-800 (manufactured by Miyoshi Oil & Fat Co., Ltd.))

### [Treatment for copper-containing wastewater]

An aqueous solution containing 20 mg/L of copper (group 11) was prepared as a test wastewater (subject water solution) which was subjected to wastewater treatments following the procedures as indicated below and evaluated.

The heavy metal treatment agent was added to 200mL of the test wastewater while performing stirring at 200 rpm at the additive amounts as shown in Table 4 until the content percentages of dithiocarbamate groups of the component (A) in the added heavy metal treatment agent with respect to the wastewater reached the same amount, and it was subsequently stirred for 10 minutes. After the stirring was finished, the mixture was allowed to stand for 10 minutes, and the flocs were filtered out with a filter (Class 5A specified in JIS P 3801). The copper concentrations in the filtrate and the test wastewater were measured using an ICP atomic emission spectrometer (ICPE-9820, manufactured by SHIMADZU CORPORATION). The results are as shown in Table 4.

**[Tbale 4]**

| | Working example | | | | | | | | | Comparative example | | | |
|---|---|---|---|---|---|---|---|---|---|---|---|---|---|
| | 17 | 18 | 19 | 20 | 21 | 22 | 23 | 24 | 61 | 3 | 4 | 5 | 6 |
| Heavy metal treatment agent | 1 | 2 | 3 | 4 | 6 | 7 | 8 | 9 | 10 | 11 | 12 | 13 | 14 |
| Concentration (wt.%) of heavy metal treatment agent | 40.0 | 40.0 | 40.0 | 40.0 | 40.0 | 25.0 | 25.0 | 25.0 | 40.0 | 40.0 | 40.0 | 40.0 | 40.0 |
| Content percentage (wt.%) of dithiocarbamate groups of the component (A) in heavy metal treatment agent | 18.7 | 20.9 | 20.2 | 21.2 | 20.9 | 7.8 | 7.8 | 7.8 | 20.9 | 18.7 | 20.9 | 20.2 | 21.2 |
| Additive amount (mg/L) of heavy metal treatment agent | 214 | 191 | 198 | 189 | 191 | 510 | 510 | 510 | 191 | 214 | 191 | 198 | 189 |
| Content (mg/L) of dithiocarbamate groups of the component (A) in added heavy metal treatment agent | 40 | 40 | 40 | 40 | 40 | 40 | 40 | 40 | 40 | 40 | 40 | 40 | 40 |
| Copper concentration (mg/L) in filtrate | 0.42 | 0.28 | 0.32 | 0.39 | 0.42 | 0.05 | <0.02 | 0.03 | 0.38 | 0.63 | 0.44 | 0.46 | 0.54 |

As shown in Table 4, when the heavy metal treatment agent was added until the content percentages of dithiocarbamate groups of the component (A) in the added heavy metal treatment agent reached the same amount, Working Examples 17 to 24, and 61 exhibited lower concentrations of copper (group 11) in the filtrate compared to those of Comparative examples 3 to 6, which therefore shows that the heavy metal treatment agent of the present invention exhibits enhanced performance for treating the elements of group 11.

In view of the respective comparisons between Working Example 17 and Comparative Example 3, between Working Example 18 and Comparative Example 4, between Working Example 19 and Comparative Example 5, and between Working Example 20 and Comparative Example 6, it was demonstrated that the filtrates of Working Examples 17 to 20 contained copper at lower concentrations, which demonstrates the superiority of the heavy metal treatment agent, containing a base (B), in treating elements of groups 11 or their compounds.

Comparing Working Examples 22 to 24 with Working Examples 18 and 21, it was demonstrated that the filtrates of Working Examples 22 to 24 contained copper at lower concentrations, which indicates the superiority of the heavy metal treatment agent, containing a dithiocarbamate (D) of polyethyleneimine or a sulfur-containing compound (E), in treating elements of groups 11 or their compounds, particularly of the heavy metal treatment agent, containing a sulfur-containing compound (E), in treating elements of groups 11 or their compounds.

Comparing Working Examples 18 to 20 with Working Example 17, Working Examples 18 to 20 exhibited lower elution concentrations of copper in the filtrate, and the dithiocarbamate showed superior performance for treating the elements of group 11 or compounds thereof when the dithiocarbamate contains any one or more amine compounds of the formulae (IIIa), (IIIb) and (IIIc), particularly when the compounds have not only formulae (IIIa) and (IIIb) but also formula (IIIc); or when the dithiocarbamate contains any one or more amine compounds of the formulae (I), (II) and (III), particularly when the amine compounds have not only formulae (Ia), (IIa), (IIIa) and (IIIb) but also formula (IIIc).

Comparing Working Examples 18 and 19 with Working Example 20, Working Examples 18 and 19 had lower concentrations of copper in the filtrate, thus showing a tendency that the agents having a greater amount of amine compound of formula (III) in the mixed system of the formulae (I) to (III) lead to more superior performance for treating the element of group 11 or compounds thereof.

Further, comparing Working Example 18 with Working Examples 19 and 20, Working Example 18 had a lower concentration of copper in the filtrate, which suggests that the agents having greater amounts of total amine compounds of formulae (IIIa) and (IIIb) lead to more superior performance for treating the subject element or compounds thereof.

### [Treatment for chrome-containing wastewater]

An aqueous solution containing chrome (Group 6 element) at 10 mg/L was prepared as a test wastewater (subject water solution), which was subjected to wastewater treatment following the procedures as shown below. To 200 mL of this test wastewater was added the heavy metal treatment agent while performing stirring at 200 rpm such that the content percentages of dithiocarbamate groups of the component (A) in the added heavy metal treatment agent to the wastewater were as shown in Table 5, and it was subsequently stirred for 10 minutes. The pH was then adjusted to pH 8 using a sodium hydroxide solution. A polymer flocculant was then added and stirred for 2 minutes at a rotation speed of 20 rpm. After the stirring was finished, it was allowed to stand for 10 minutes, and the flocs were filtered out with filter paper. The concentrations of chrome in the wastewater and filtrate were measured using an ICP atomic emission spectrometer. The results are as shown in Table 5.

**[Table 5]**

| | Working example | | | Comparative example |
|---|---|---|---|---|
| | 25 | 26 | 27 | 7 |
| Heavy metal treatment agent | 7 | 8 | 9 | 12 |
| Concentration (wt.%) of heavy metal treatment agent | 25.0 | 25.0 | 25.0 | 40.0 |
| Content percentage (wt.%) of dithiocarbamate groups of the component (A) in heavy metal treatment agent | 7.8 | 7.8 | 7.8 | 20.9 |
| Additive amount (mg/L) of heavy metal treatment agent | 64 | 64 | 64 | 48 |
| Content (mg/L) of dithiocarbamate groups of the component (A) in added heavy metal treatment agent | 5 | 5 | 5 | 10 |
| Adjusted pH value | 8 | 8 | 8 | 8 |
| Polymer flocculant (mg/L) | 2 | 2 | 2 | 2 |
| Chromium concentration (mg/L) in filtrate | 1.2 | 1.8 | 2.1 | 3.8 |

As shown in Table 5, the filtrates of Working Examples 25 to 27 exhibited lower concentrations of chrome (group 6) compared to Comparative Example 7 even though the heavy metal treatment agents added in Working Examples 25 to 27 contained half the amount of dithiocarbamate groups of the component (A) compared to the agent used in Comparative Example 7, which demonstrate that the heavy metal treatment agent of the present invention exhibits enhanced performance for treating group 6 elements.

### [Treatment for manganese-containing wastewater]

An aqueous solution containing manganese (Group 7 element) at 10 mg/L was prepared as the test wastewater (subject water solution), which was subjected to wastewater treatment following the procedures as shown below and then evaluated. To 200 mL of this test wastewater was added the heavy metal treatment agent while performing stirring at 200 rpm until the content percentages of dithiocarbamate groups of the component (A) in the added heavy metal treatment agent to the wastewater reached the additive amounts as shown in Table 6, and it was subsequently stirred for 10 minutes. After the stirring was finished, it was allowed to stand for 10 minutes, and the flocs were filtered out with filter paper. The concentrations of manganese in the wastewater and filtrate were measured using an ICP atomic emission spectrometer. The results are as shown in Table 6.

**[Table 6]**

| | Working example | | | Comparative example |
|---|---|---|---|---|
| | 28 | 29 | 30 | 8 |
| Heavy metal treatment agent | 7 | 8 | 9 | 12 |
| Concentration (wt.%) of heavy metal treatment agent | 25.0 | 25.0 | 25.0 | 40.0 |
| Content percentage (wt.%) of dithiocarbamate groups of the component (A) in heavy metal treatment agent | 7.8 | 7.8 | 7.8 | 20.9 |
| Additive amount (mg/L) of heavy metal treatment agent | 191 | 191 | 191 | 120 |
| Content (mg/L) of dithiocarbamate groups of the component (A) in added heavy metal treatment agent | 15 | 15 | 15 | 25 |
| Manganese concentration (mg/L) in filtrate | 4.2 | 3.9 | 3.4 | 5.2 |

As shown in Table 6, the filtrates of Working Examples 28 to 30 exhibited lower concentrations of manganese (group 7) compared to Comparative Example 8 even though the heavy metal treatment agents added in Working Examples 28 to 30 contained smaller amounts of dithiocarbamate groups of the component (A), which demonstrate that the heavy metal treatment agent of the present invention exhibits enhanced performance for treating group 7 elements.

### [Treatment for iron-containing wastewater]

An aqueous solution containing iron (Group 8 element) at 10 mg/L was prepared as a test wastewater (subject water solution), which was subjected to wastewater treatment following the procedures as shown below and then evaluated. To 200 mL of this test wastewater was added the heavy metal treatment agent while performing stirring at 200 rpm until the content percentages of dithiocarbamate groups of the component (A) in the added heavy metal treatment agent to the wastewater reached the additive amounts as shown in Table 7, and it was subsequently stirred for 10 minutes. After the stirring was finished, it was allowed to stand for 10 minutes, and the flocs were filtered out with filter paper. The concentrations of iron in the wastewater and the filtrate were measured using an ICP atomic emission spectrometer. The results are as shown in Table 7.

**[Table 7]**

| | Working example | | | Comparative example |
|---|---|---|---|---|
| | 31 | 32 | 33 | 9 |
| Heavy metal treatment agent | 7 | 8 | 9 | 12 |
| Concentration (wt.%) of heavy metal treatment agent | 25.0 | 25.0 | 25.0 | 40.0 |
| Content percentage (wt.%) of dithiocarbamate groups of the component (A) in heavy metal treatment agent | 7.8 | 7.8 | 7.8 | 20.9 |
| Additive amount (mg/L) of heavy metal treatment agent | 191 | 191 | 191 | 120 |
| Content (mg/L) of dithiocarbamate groups of the component (A) in added heavy metal treatment agent | 15 | 15 | 15 | 25 |
| Iron concentration (mg/L) in filtrate | 0.66 | 0.45 | <0.02 | 1.0 |

As shown in Table 7, the filtrates of Working Examples 31 to 33 exhibited lower concentrations of iron (group 8) compared to Comparative Example 9 even though the heavy metal treatment agents added in Working Examples 31 to 33 contained smaller amounts of dithiocarbamate groups of the component (A), which demonstrate that the heavy metal treatment agent of the present invention exhibits enhanced performance for treating group 8 elements.

### [Treatment for cobalt-containing wastewater]

An aqueous solution containing cobalt (Group 9 element) at 10 mg/L was prepared as the test wastewater (subject water solution), which was subjected to wastewater treatment following the procedures as shown below and then evaluated. To 200 mL of this test wastewater was added the heavy metal treatment agent while performing stirring at 200 rpm until the content percentages of dithiocarbamate groups of the added heavy metal treatment agent to the wastewater reached the additive amounts as shown in Table 8, and it was subsequently stirred for 10 minutes. After the stirring was finished, it was allowed to stand for 10 minutes, and the flocs were filtered out with filter paper. The concentrations of cobalt in the wastewater and filtrate were measured using an ICP atomic emission spectrometer. The results are as shown in Table 8.

**[Table 8]**

| | Working example | | | Comparative example |
|---|---|---|---|---|
| | 34 | 35 | 36 | 10 |
| Heavy metal treatment agent | 7 | 8 | 9 | 12 |
| Concentration (wt.%) of heavy metal treatment agent | 25.0 | 25.0 | 25.0 | 40.0 |
| Content percentage (wt.%) of dithiocarbamate groups of the component (A) in heavy metal treatment agent | 7.8 | 7.8 | 7.8 | 20.9 |
| Additive amount (mg/L) of heavy metal treatment agent | 128 | 128 | 128 | 120 |
| Content (mg/L) of dithiocarbamate groups of the component (A) in added heavy metal treatment agent | 10 | 10 | 10 | 25 |
| Cobalt concentration (mg/L) in filtrate | 1.3 | 0.72 | 0.84 | 1.5 |

As shown in Table 8, the filtrates of Working Examples 34 to 36 exhibited lower concentrations of cobalt (group 9) compared to Comparative Example 10 even though the heavy metal treatment agents added in Working Examples 34 to 36 contained smaller amounts of dithiocarbamate groups of the component (A), which demonstrate that the heavy metal treatment agent of the present invention exhibits enhanced performance for treating group 9 elements.

### [Treatment for aluminum-containing wastewater]

An aqueous solution containing aluminum (Group 13 element) at 10 mg/L was prepared as the test wastewater (subject water solution), which was subjected to wastewater treatment following the procedures as shown below and then evaluated. To 200 mL of this test wastewater was added the heavy metal treatment agent while performing stirring at 200 rpm until the content percentages of the dithiocarbamate group of the component (A) in the added heavy metal treatment agent to the wastewater reached the additive amounts as shown in Table 9, and it was subsequently stirred for 10 minutes. The pH was then adjusted to pH 8 using a sodium hydroxide solution. A polymer flocculant was then added and stirred for 2 minutes at a rotation speed of 20 rpm. After the stirring was finished, it was allowed to stand for 10 minutes, and the flocs were filtered out with filter paper. The concentrations of aluminum in the wastewater and filtrate were measured using an ICP atomic emission spectrometer. The results are as shown in Table 9.

**[Table 9]**

| | Working example | | | Comparative example |
|---|---|---|---|---|
| | 37 | 38 | 39 | 11 |
| Heavy metal treatment agent | 7 | 8 | 9 | 12 |
| Concentration (wt.%) of heavy metal treatment agent | 25.0 | 25.0 | 25.0 | 40.0 |
| Content percentage (wt.%) of dithiocarbamate groups of the component (A) in heavy metal treatment agent | 7.8 | 7.8 | 7.8 | 20.9 |
| Additive amount (mg/L) of heavy metal treatment agent | 191 | 191 | 191 | 120 |
| Content (mg/L) of dithiocarbamate groups of the component (A) in added heavy metal treatment agent | 15 | 15 | 15 | 25 |
| Adjusted pH value | 8 | 8 | 8 | 8 |
| Polymer flocculant(mg/L) | 2 | 2 | 2 | 2 |
| Aluminum concentration (mg/L) in filtrate | 0.37 | 0.25 | 0.53 | 0.77 |

As shown in Table 9, the filtrates of Working Examples 37 to 39 exhibited lower concentrations of aluminum (group 13) compared to Comparative Example 11 even though the heavy metal treatment agents added in Working Examples 37 to 39 contained smaller amounts of dithiocarbamate groups of the component (A), which demonstrate that the heavy metal treatment agent of the present invention exhibits enhanced performance for treating group 13 elements.

### [Treatment 1 for nickel and zinc-containing wastewater]

A test wastewater containing nickel (group 10) at the concentration of 10mg/L and zinc (group 12) at the concentration of 10mg/L was prepared beforehand. The heavy metal treatment agent was added to 200mL of the above-mentioned wastewater while performing stirring at 200 rpm at the additive amounts as shown in Table 10 until the content percentages of dithiocarbamate groups of the component (A) in the added heavy metal treatment agent to the wastewater reached the same amount, and it was subsequently stirred for 10 minutes.

A 38% aqueous solution of ferric chloride or an aqueous solution of aluminum sulfate, serving as an inorganic flocculant, was added thereinto until it reached the additive amount as shown in Table 10, and the mixture was stirred for 5 minutes.

The pH was then adjusted to pH 8 using a sodium hydroxide solution (pH adjustment). A polymer flocculant was then added and stirred for 2 minutes at a rotation speed of 20 rpm. After the stirring was finished, it was allowed to stand for 10 minutes, and the flocs were filtered out with filter paper, and concentrations of nickel and zinc in the filtrate were measured. The concentrations of nickel and zinc in the filtrate were measured using an ICP atomic emission spectrometer. The same operations as shown above were performed for Working Examples 40 and 41 and Comparative Example 12 except that the pH adjustments were not performed. The same operations as shown above were also performed for Working Example 44 except that no flocculant was added. The results are as shown in Table 10.

**[Table 10]**

| | Working example | | | | | | | Comparative example | |
|---|---|---|---|---|---|---|---|---|---|
| | 40 | 41 | 42 | 43 | 44 | 62 | 63 | 12 | 13 |
| Heavy metal treatment agent | 8 | 8 | 8 | 8 | 8 | 10 | 10 | 12 | 12 |
| Concentration (wt.%) of heavy metal treatment agent | 25.0 | 25.0 | 25.0 | 25.0 | 25.0 | 40.0 | 40.0 | 40.0 | 40.0 |
| Content percentage (wt.%) of dithiocarbamate groups of the component (A) in heavy metal treatment agent | 7.8 | 7.8 | 7.8 | 7.8 | 7.8 | 20.9 | 20.9 | 20.9 | 20.9 |
| Additive amount (mg/L) of heavy metal treatment agent | 191 | 191 | 191 | 191 | 191 | 72 | 72 | 72 | 72 |
| Content (mg/L) of dithiocarbamate groups of the component (A) in added heavy metal treatment agent | 15 | 15 | 15 | 15 | 15 | 15 | 15 | 15 | 15 |
| Additive amount (mg/L) of 38% ferric chloride | 100 | - | 100 | - | 100 | 100 | - | 100 | 100 |
| Additive amount (mg/L) of aluminium sulfate | - | 100 | - | 100 | - | - | 100 | - | - |
| pH of test wastewater after adjustment | - | - | 8 | 8 | 8 | 8 | 8 | - | 8 |
| Additive amount (mg/L) of polymer flocculant | 2 | 2 | 2 | 2 | - | 2 | 2 | 2 | 2 |
| Nickel concentration (mg/L) in filtrate | 4.1 | 3.9 | 0.82 | 0.30 | 1.1 | 1.8 | 1.8 | 7.4 | 2.0 |
| Zinc concentration (mg/L) in filtrate | 2.5 | 0.17 | 0.05 | <0.02 | 0.14 | 1.5 | 1.4 | 8.9 | 1.8 |

As shown in Table 10, the filtrates of Working Examples 40 to 44, 62, and 63 exhibited lower concentrations of nickel and zinc compared to Comparative Examples 12 and 13 which demonstrate that the heavy metal treatment agent of the present invention exhibits enhanced performance for treating elements of groups 10 and 12 or their compounds.

Comparing Working Example 42 with Working Example 44, the filtrate of Working Example 42 to which a polymer flocculant was added exhibited even lower concentrations of nickel and zinc compared to Working Example 44, which therefore demonstrates that the heavy metal treatment agent of the present invention in combined use with a polymer flocculant and an inorganic flocculant exhibits enhanced performance of the heavy metal treatment agent, according to the present invention, for treating elements of groups 10 and 12 or their compounds.

In addition, in view of the comparisons between Working Example 40 and Working Example 42 and between Working Example 41 and Working Example 43, the filtrates of Working Examples 42 and 43 whose pHs were adjusted exhibited even lower concentrations of nickel and zinc, which therefore demonstrates that the heavy metal treatment agent of the present invention in combined use with a polymer flocculant, an inorganic flocculant, and pH adjustment exhibits the enhanced performance of the heavy metal treatment agent, according to the present invention, for treating elements of groups 10 and 12 or their compounds.

Moreover, in view of the comparisons between Working Example 40 and Working Example 41 and between Working Example 42 and Working Example 43, the filtrates of Working Examples 41 and 43 that employ aluminum sulfate as an inorganic flocculant exhibited even lower concentrations of nickel and zinc, which demonstrate that the heavy metal treatment agent of the present invention using aluminum sulfate as an inorganic flocculant exhibits particularly enhanced performance of the heavy metal treatment agent, according to the present invention, for treating elements of groups 10 and 12 or their compounds among the agents of the present invention in combined use with a polymer flocculant, an inorganic flocculant, and pH adjustment.

### [Treatment 2 for nickel and zinc-containing wastewater]

A test wastewater containing nickel (group 10) at the concentration of 10mg/L and zinc (group 12) at the concentration of 10mg/L was prepared beforehand. A 38% aqueous solution of ferric chloride or an aqueous solution of aluminum sulfate, serving as an inorganic flocculant, was added to 200mL of the above-mentioned wastewater while performing stirring at 200 rpm until it reached the additive amounts as shown in Table 11, and the mixture was stirred for 5 minutes. Then, the heavy metal treatment agent was added until the content percentages of dithiocarbamate group of the component (A) in the added heavy metal treatment agent to the wastewater reached the additive amounts as shown in Table 11, and it was subsequently stirred for 10 minutes. The pH was then adjusted to pH 8 using a sodium hydroxide solution (pH adjustment). A polymer flocculant was then added and stirred for 2 minutes at a rotation speed of 20 rpm. After the stirring was finished, it was allowed to stand for 10 minutes, and the flocs were filtered out with filter paper, and concentrations of nickel and zinc in the filtrate were measured. The concentrations of nickel and zinc in the filtrate were measured using an ICP atomic emission spectrometer. The same operations as shown above were performed for Working Examples 45 and 46 and Comparative example 14 except that the pH adjustments were not performed. The results are as shown in Table 11.

**[Table 11]**

| | Working example | | | | Comparative example | |
|---|---|---|---|---|---|---|
| | 45 | 46 | 47 | 48 | 14 | 15 |
| Heavy metal treatment agent | 8 | 8 | 8 | 8 | 12 | 12 |
| Concentration (wt.%) of heavy metal treatment agent | 25.0 | 25.0 | 25.0 | 25.0 | 40.0 | 40.0 |
| Content percentage (wt.%) of dithiocarbamate groups of the component (A) in heavy metal treatment agent | 7.8 | 7.8 | 7.8 | 7.8 | 20.9 | 20.9 |
| Additive amount (mg/L) of heavy metal treatment agent | 191 | 191 | 191 | 191 | 215 | 215 |
| Content (mg/L) of dithiocarbamate groups of the component (A) in added heavy metal treatment agent | 15 | 15 | 15 | 15 | 45 | 45 |
| Additive amount (mg/L) of 38% ferric chloride | 100 | - | 100 | - | 100 | 100 |
| Additive amount (mg/L) of aluminium sulfate | - | 100 | - | 100 | - | - |
| pH of test wastewater after adjustment | - | - | 8 | 8 | - | 8 |
| Additive amount (mg/L) of polymer flocculant | 2 | 2 | 2 | 2 | 2 | 2 |
| Nickel concentration (mg/L) in filtrate | 6.9 | 6.4 | 1.6 | 0.84 | 7.6 | 5.2 |
| Zinc concentration (mg/L) in filtrate | 4.1 | 0.10 | 0.28 | <0.02 | 9.8 | 5.3 |

Table 11 shows that the nickel and zinc concentrations in the filtrates of Working Example 45 to 48 were lower than those of Comparative examples 14 and 15, and the heavy metal treatment agent of the present invention exhibited enhanced performance for treating the elements of groups 10 and 12 or compounds thereof, which therefore indicates enhanced treating performance on the elements of groups 10 and 12 or compounds thereof regardless of the adding sequence of the heavy metal treatment agent of the present invention and the inorganic flocculant.

Regarding the sequence for adding the heavy metal treatment agent of the present invention and the inorganic flocculant, the results in Tables 10 and 11 support the preference for adding the heavy metal treatment agent of the present invention first.

It was also indicated that the treatments of the above-described systems using the heavy metal treatment agent of the present invention can be applied to wastewater from a plating plant.

### [Treatment of wastewater containing combined elements]

A test wastewater containing chromium (Group 6) at the concentration of 0.5 mg/L, copper (Group 11) at the concentration of 0.5 mg/L, cadmium (Group 12) at the concentration of 0.2 mg/L, mercury (Group 12) at the concentration of 1.0 mg/L, lead (Group 14) at the concentration of 1.5 mg/L, arsenic (Group 15) at the concentration of 0.5 mg/L, selenium (group 16) at the concentration of 0.5 mg/L, and sodium chloride at the concentration of 50 g/L was prepared beforehand.

In Working Example 49, 200 mL of the above test wastewater was adjusted using a sodium hydroxide solution to have a pH of 6 while performing stirring at 200 rpm (pH adjustment (1)). The heavy metal treatment agent was added thereto until the content percentage of dithiocarbamate groups of the component (A) in the added heavy metal treatment agent to the wastewater reached the additive amount as shown in Table 12, and it was subsequently stirred for 10 minutes. After that, a 38% aqueous solution of ferric chloride, serving as an inorganic flocculant, was then added at the additive amount as listed in Table 12 and then stirred for five minutes. The pH was then adjusted to pH 8 using a sodium hydroxide solution (pH adjustment (2)). A polymer flocculant was then added and it was stirred for 2 minutes at a rotation speed of 20 rpm. After the stirring was finished, it was allowed to stand for 10 minutes, and the flocs were filtered out with filter paper, and concentrations of the respective elements in the filtrate were measured.

In Working Example 50, 200 mL of the above test wastewater was adjusted using a sodium hydroxide solution to have a pH of 6 while stirring the mixture at 200 rpm (pH adjustment (1)). A 38% aqueous solution of ferric chloride, serving as an inorganic flocculant, was added thereinto until it reached the additive amount as shown in Table 12, and the mixture was stirred for 5 minutes. After that, the heavy metal treatment agent was added thereto until the content percentage of dithiocarbamate groups of the component (A) in the added heavy metal treatment agent to the wastewater reached the additive amount as shown in Table 12, and it was subsequently stirred for 10 minutes. The pH was then adjusted to pH 8 using a sodium hydroxide solution (pH adjustment (2)). A polymer flocculant was then added thereto and it was stirred for 2 minutes at a rotation speed of 20 rpm. After the stirring was finished, it was allowed to stand for 10 minutes, and the flocs were filtered out with filter paper, and concentrations of the respective elements in the filtrate were measured.

In Working Example 51, 200 mL of the above test wastewater was adjusted using a sodium hydroxide solution to have a pH of 6 while performing stirring at 200 rpm (pH adjustment (1)). The heavy metal treatment agent was added thereto until the content percentage of dithiocarbamate groups of the component (A) in the added heavy metal treatment agent to the wastewater reached the additive amount as shown in Table 12, while adding a 38% aqueous solution of ferric chloride, serving as an inorganic flocculant, thereinto at the same time until it reached the additive amount as shown in Table 12, and the mixture was stirred for 10 minutes. The pH was then adjusted to pH 8 using a sodium hydroxide solution (pH adjustment (2)). A polymer flocculant was then added thereto and it was stirred for 2 minutes at a rotation speed of 20 rpm. After the stirring was finished, it was allowed to stand for 10 minutes, and the flocs were filtered out with filter paper, and concentrations of the respective elements in the filtrate were measured.

In Working Example 52, 200 mL of the above test wastewater was adjusted using a sodium hydroxide solution to have a pH of 6 while performing stirring at 200 rpm (pH adjustment (1)). The heavy metal treatment agent was added thereto until the content percentage of dithiocarbamate groups of the component (A) in the added heavy metal treatment agent to the wastewater reached the additive amount as shown in Table 12, and it was subsequently stirred for 10 minutes. Then, a 38% aqueous solution of ferric chloride, serving as an inorganic flocculant, was added thereinto until it reached the additive amount as shown in Table 12, and the mixture was stirred for 5 minutes. The pH was then adjusted to pH 8 using a sodium hydroxide solution (pH adjustment (2)). After the stirring was finished, it was allowed to stand for 10 minutes, and the flocs were filtered out with filter paper, and concentrations of the respective elements in the filtrate were measured.

The concentrations of chromium, copper, cadmium, lead, arsenic, and selenium in the elute were measured using an ICP atomic emission spectrometer while the concentration of mercury was measured using a mercury analyser (MA-3000 manufactured by Nippon Instruments Corporation). The results are as shown in Table 12.

**[Table 12]**

| | Working example | | | |
|---|---|---|---|---|
| | 49 | 50 | 51 | 52 |
| Heavy metal treatment agent | 8 | 8 | 8 | 8 |
| Concentration (wt.%) of heavy metal treatment agent | 25.0 | 25.0 | 25.0 | 25.0 |
| Content percentage (wt.%) of dithiocarbamate groups of the component (A) in heavy meta treatment agent | 7.8 | 7.8 | 7.8 | 7.8 |
| Additive amount (mg/L) of heavy metal treatment agent | 191 | 191 | 191 | 191 |
| Content (mg/L) of dithiocarbamate groups of the component (A) in added heavy metal treatment agent | 15 | 15 | 15 | 15 |
| pH of test wastewater after pH adjustment (1) | 6 | 6 | 6 | 6 |
| Additive amount (mg/L) of 38% ferric chloride | 200 | 200 | 200 | 200 |
| pH of test wastewater after pH adjustment (2) | 8 | 8 | 8 | 8 |
| Additive amount (mg/L) of polymer flocculant | 2 | 2 | 2 | - |
| Chromium concentration (mg/L) in filtrate | <0.05 | <0.05 | <0.05 | <0.05 |
| Copper concentration (mg/L) in filtrate | <0.05 | <0.05 | <0.05 | <0.05 |
| Cadmium concentration (mg/L) in filtrate | <0.01 | <0.01 | <0.01 | <0.01 |
| Mercury concentration (mg/L) in filtrate | <0.0005 | <0.0005 | <0.0005 | <0.0005 |
| Lead concentration (mg/L) in filtrate | <0.05 | <0.05 | <0.05 | <0.05 |
| Arsenic concentration (mg/L) in filtrate | <0.05 | <0.05 | <0.05 | <0.05 |
| Selenium concentration (mg/L) in filtrate | <0.05 | <0.05 | <0.05 | <0.05 |

As shown in Table 12, in Working Examples 49 to 51, the concentrations of chromium, copper, cadmium, mercury lead, arsenic, and selenium in the wastewater were all decreased to the level below the lower limit of quantitation regardless of the adding sequence of the heavy metal treatment agent of the present invention and the inorganic flocculant. It was therefore shown that the heavy metal treatment agent of the present invention can favourably treat the elements of groups 6, 11, 12, 14, 15, and 16 or compounds thereof. It was also shown from the results in Working Example 52 that the heavy metal treatment agent of the present invention can favourably treat the elements of groups 6, 11, 12, 14, 15, and 16 or compounds thereof without adding any polymer flocculant. It was also indicated that the treatment on the systems as described above using the heavy metal treatment agent of the present invention can be applied for scrubber wastewater from a municipal waste incineration plant.

### (Incinerated ash treatment)

The heavy metal treatment agent and water were added to 100g of incinerated ash (fly ash collected in a bag filter) generated from a municipal waste incineration plant at the additive percentages as shown in Table 13 until the content percentages of dithiocarbamate groups of the component (A) in the added heavy metal treatment agent to the fly ash reached the same level, and kneaded for 10 minutes to uniformly mix them using a porcelain mortar as a receptacle. The blank test was performed in the same manner as that of the working examples except that only water was added. The incinerated ashes (treated ashes) of the working examples and the blank test after the treatment were all in aggregated states and properly treated. The resultant treated ashes underwent measurements of elution concentration of chromium, mercury, and lead in accordance with the method as set forth in the Japanese environment agency notification No. 13. The results are as shown in Table 13. The concentrations of chromium (Group 6) and lead (Group 14) in the elute were measured using an ICP atomic emission spectrometer while the concentration of mercury (Group 12) was measured using a mercury analyser. The pHs in the elute were also measured.

**[Table 13]**

| | Working example | | | | | | | | | Blank test |
|---|---|---|---|---|---|---|---|---|---|---|
| | 53 | 54 | 55 | 56 | 57 | 58 | 59 | 60 | 64 | |
| Heavy metal treatment agent | 1 | 2 | 3 | 4 | 6 | 7 | 8 | 9 | 10 | - |
| Concentration (wt.%) of heavy metal treatment agent | 40.5 | 40.5 | 40.5 | 40.5 | 40.0 | 25.0 | 25.0 | 25.0 | 40.5 | - |
| Content (mg/L) of dithiocarbamate groups of the component (A) in added heavy metal treatment agent | 18.7 | 20.9 | 20.2 | 21.2 | 20.9 | 7.8 | 7.8 | 7.8 | 20.9 | - |
| Additive percentage (wt.%) of heavy metal treatment agent | 2.7 | 2.4 | 2.5 | 2.4 | 2.4 | 2.6 | 2.6 | 2.6 | 2.4 | - |
| Content (mg/L) of dithiocarbamate groups of the component (A) in added heavy metal treatment agent | 0.5 | 0.5 | 0.5 | 0.5 | 0.5 | 0.2 | 0.2 | 0.2 | 0.5 | - |
| Additive percentage (wt.%) of water | 27.3 | 27.6 | 27.5 | 27.6 | 27.6 | 27.4 | 27.4 | 27.4 | 27.6 | 30.0 |
| Eluate concentration (mg/L) of chromium | 0.06 | <0.05 | <0.05 | <0.05 | <0.05 | <0.05 | <0.05 | <0.05 | <0.05 | 0.17 |
| Eluate concentration (mg/L) of mercury | 0.0011 | 0.0006 | 0.0008 | 0.0009 | 0.0006 | <0.0005 | <0.0005 | <0.0005 | <0.0005 | 0.11 |
| Eluate concentration (mg/L) of lead | 0.06 | <0.05 | <0.05 | <0.05 | <0.05 | <0.05 | <0.05 | <0.05 | <0.05 | 22 |

Table 13 shows the results that the incinerated ashes treated in Working Examples 53 to 60, and 64 had amounts below the landfill standard for all of the chromium (group 6), mercury (group 12), and lead (group 14), thus demonstrating the superiority of treating elements of groups 6, 12, and 14 or their compounds. Of these, Working Examples 58 to 60 exhibited lower elution concentrations of chromium, mercury, and lead compared to Working Examples 54 and 57 even though the heavy metal treatment agents added in Working Examples 58 to 60 contained smaller amounts of dithiocarbamate groups of the component (A), which therefore demonstrates the superiority of the heavy metal treatment agent, containing a dithiocarbamate (D) of polyethyleneimine or a sulfur-containing compound (E), in treating elements of groups 6, 12, and 14 or their compounds.

Furthermore, it was also shown that the incinerated ashes treated in Working Examples 53 to 60 and 64 had amounts below the landfill standard for all of the cadmium (group 12), arsenic (group 15) and selenium (group 16). Moreover, the elutes of untreated incinerated ash, the working examples, and the blank test all had a pH of 12.4, indicating that the heavy metal treatment agent of the present invention can treat the elements of groups 6 to 16 or compounds thereof if the treatment liquid of the incinerated ash has a pH of 11.5 or greater.

In view of the above, it was suggested that the heavy metal treatment agent of the present invention is excellent in treating the elements of groups 6 to 16 or compounds thereof.

The results as shown above indicate that the heavy metal treatment agent of the present invention is excellent in stability when it is mixed with water that contains minerals or the like, reacts well with the elements of groups 6 to 16 or compounds thereof and forms water-insoluble flocculence (flocs) due to its structural characteristics, and has excellent treatment performance and is highly useful owing to its excellent stability in the produced flocs.

### (Floc stability test)

A test wastewater containing nickel (group 10) at a concentration of 50 mg/L, copper (group 11) at a concentration of 50 mg/L, zinc (group 12) at a concentration of 0.2 mg/L, and lead (group 14) at a concentration of 1.5 mg/L was prepared beforehand.

To 10 L of the above-mentioned test wastewater was added the heavy metal treatment agents while performing stirring at 200 rpm until the content percentages of dithiocarbamate groups of the component (A) in the added heavy metal treatment agent to the wastewater reached added amounts as shown in Table 14, and it was subsequently stirred for 10 minutes. After that, 38% aqueous solution of ferric chloride, serving as an inorganic flocculant, was then added at the additive amount as indicated in Table 14 and then stirred for five minutes. The pH was then adjusted to pH 8 using a sodium hydroxide solution (pH adjustment). A polymer flocculant was then added and it was stirred for 2 minutes at a rotation speed of 20 rpm. After the stirring was finished, it was allowed to stand for 10 minutes, and the flocs were filtered out with filter paper, and concentrations of the respective elements in the filtrate were measured. The resultant flocs underwent measurements of elution concentration of the respective elements in accordance with the method as set forth in the Japanese environment agency notification No. 13. The results are as shown in Table 14.

**[Table 14]**

| | | Working example | | | | Comparative example |
|---|---|---|---|---|---|---|
| | | 65 | 66 | 67 | 68 | 16 |
| Heavy metal treatment agent | | 7 | 8 | 9 | 10 | 12 |
| Concentration (wt.%) of heavy metal treatment agent | | 25.0 | 25.0 | 25.0 | 40.0 | 40.0 |
| Content percentage (wt.%) of dithiocarbamate groups of the component (A) in heavy metal treatment agent | | 7.8 | 7.8 | 7.8 | 20.9 | 20.9 |
| Additive amount (mg/L) of heavy metal treatment agent | | 510 | 510 | 510 | 287 | 287 |
| Content (mg/L) of dithiocarbamate groups of the component (A) in added heavy metal treatment agent | | 40 | 40 | 40 | 60 | 60 |
| Additive amount (mg/L) of 38% ferric chloride | | 500 | 500 | 500 | 500 | 500 |
| pH of test wastewater after adjustment | | 8 | 8 | 8 | 8 | 8 |
| Additive amount (mg/L) of polymer flocculant | | 2 | 2 | 2 | 2 | 2 |
| Wastewater treatment | Eluate concentration (mg/L) of nickel | 0.42 | 0.21 | 0.30 | 1.3 | 1.5 |
| | Eluate concentration (mg/L) of zinc | 0.72 | 0.26 | 0.38 | 1.8 | 1.9 |
| | Eluate concentration (mg/L) of copper | <0.05 | <0.05 | <0.05 | 0.15 | 0.18 |
| | Eluate concentration (mg/L) of lead | <0.05 | <0.05 | <0.05 | <0.05 | <0.05 |
| Elution test of flocs | Eluate concentration (mg/L) of nickel | <0.05 | <0.05 | <0.05 | <0.05 | 0.06 |
| | Eluate concentration (mg/L) of zinc | <0.05 | <0.05 | <0.05 | 0.08 | 0.09 |
| | Eluate concentration (mg/L) of copper | <0.05 | <0.05 | <0.05 | <0.05 | 0.06 |
| | Eluate concentration (mg/L) of lead | <0.05 | <0.05 | <0.05 | <0.05 | 0.06 |

Table 14 shows that the concentrations of nickel, zinc, copper, and lead in the filtrate of Working Examples 65 to 68 were lower than those of Comparative example 16, which therefore demonstrates excellent functionality for treating elements of groups 10, 11, 12, and 14 or their compounds. Moreover, Working Examples 65 to 68 exhibited lower elution concentrations of the respective elements from the produced flocs compared to those of Comparative example 16, and inhibited re-elution of the respective elements from the flocs, thus demonstrating excellent stability of flocs treated with the heavy metal treatment agent of the present invention.

## Claims

1. A heavy metal treatment agent comprising:
(A) at least one dithiocarbamate of one or more amine compounds represented by any of formulae (I) to (III) defined as: 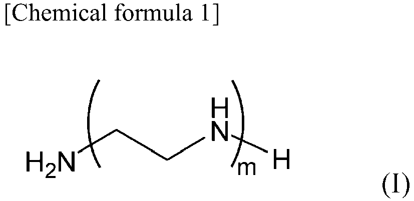
wherein m represents an integer of 3 to 6; 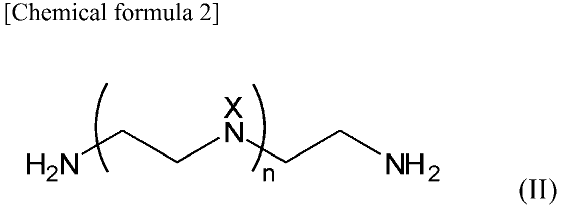
wherein each of the n Xs independently represents a hydrogen atom or a 2-aminoethyl group, at least one X is a 2-aminoethyl group, n is an integer of 1 to 3, and the total number of nitrogen atoms is 4 to 8; and 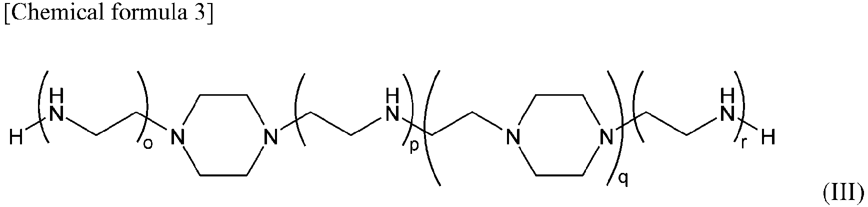
wherein o is an integer of 0 to 2, p is 0 or 1, q is 0 or 1, r is an integer of 0 to 3, the sum of o, p and r is greater than or equal to 1, and the total number of nitrogen atoms is 3 to 7; and
at least one species selected from the components (B) to (E) as defined in the following as:
(B) a base;
(C) at least one species selected from aminocarboxylic acids, mercaptans, and aminophosphoric acids;
(D) a dithiocarbamate of polyethyleneimine; and
(E) a sulfur-containing compound.

2. The heavy metal treatment agent according to claim 1, wherein the one or more amine compounds comprise an amine compound represented by the formula (III).

3. The heavy metal treatment agent according to claim 2, wherein the one or more amine compounds comprise, as an amine compound represented by the formula (III), at least one species selected from amine compounds represented by the following formulae (IIIa), (IIIb) and (IIIc):

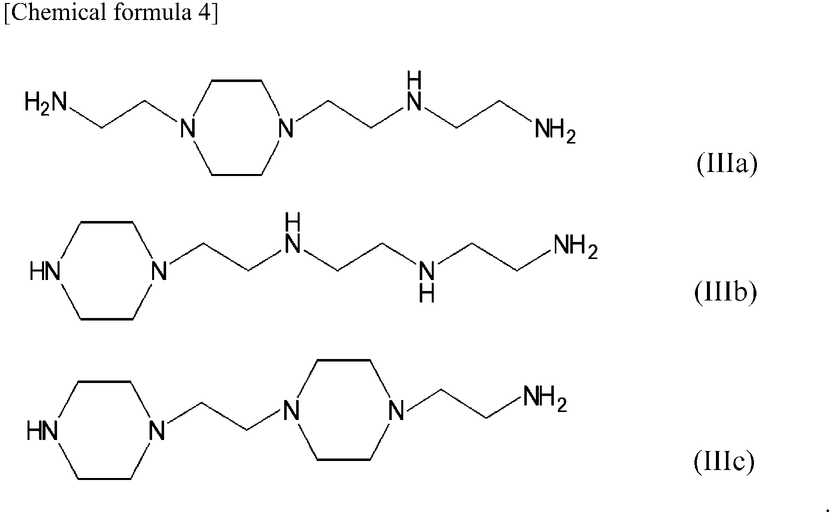

4. The heavy metal treatment agent according to claim 3, wherein the one or more amine compounds comprise, as amine compounds represented by the formula (III), both of the amine compounds represented by the following formulae (IIIa) and (IIIb):

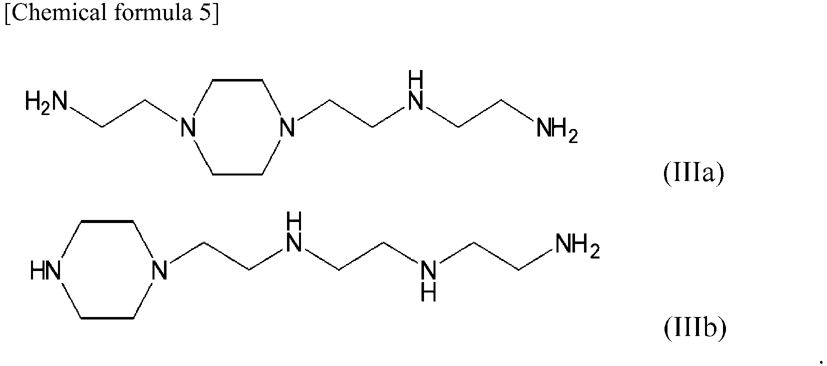

5. The heavy metal treatment agent according to claim 4, wherein the one or more amine compounds further comprise, as an amine compound represented by the formula (III), an amine compound represented by the following formula (IIIc):

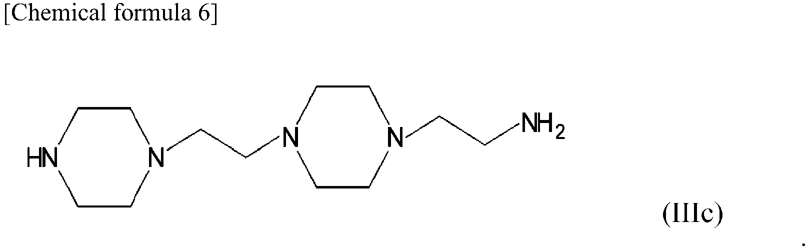

6. The heavy metal treatment agent according to claim 1, wherein the one or more amine compounds comprise all of the amine compounds represented by the formulae (I), (II), and (III).

7. The heavy metal treatment agent according to claim 6, wherein the one or more amine compounds comprise, as amine compounds represented by any of formulae (I) to (III), all of the amine compounds represented by the following formulae (Ia), (IIa), (IIIa) and (IIIb):

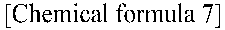

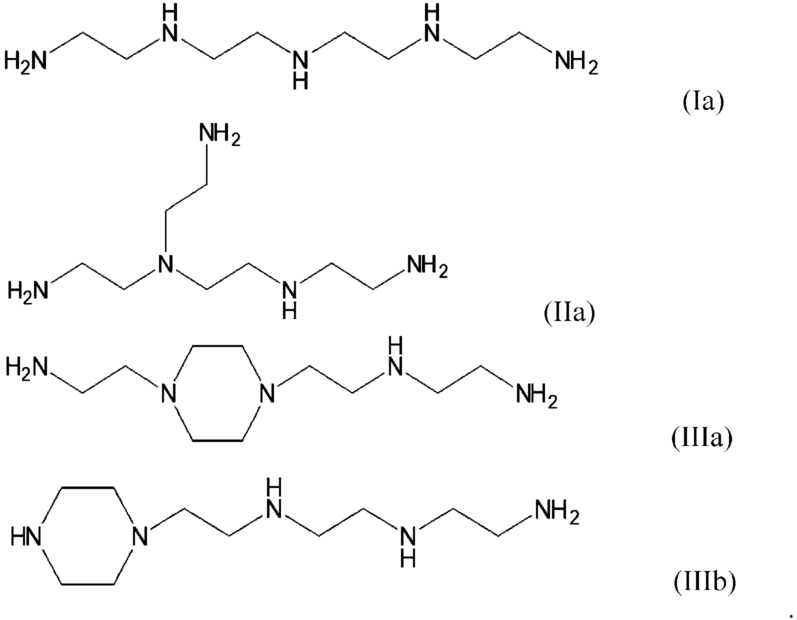

8. The heavy metal treatment agent according to claim 7, wherein the one or more amine compounds further comprise, as an amine compound represented by the formula (III), an amine compound represented by the following formula (IIIc):

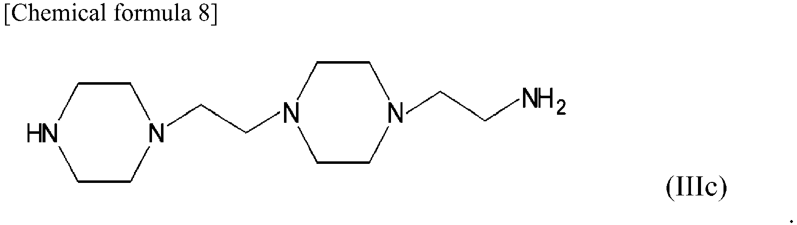

9. The heavy metal treatment agent according to claim 1, wherein the one or more amine compounds comprise an amine compound represented by the formula (III) in an amount of 10.0% or more and 80.0% or less.

10. The heavy metal treatment agent according to claim 1, wherein the one or more amine compounds comprise, as amine compounds represented by the formula (III), both of the amine compounds represented by the following formulae (IIIa) and (IIIb): 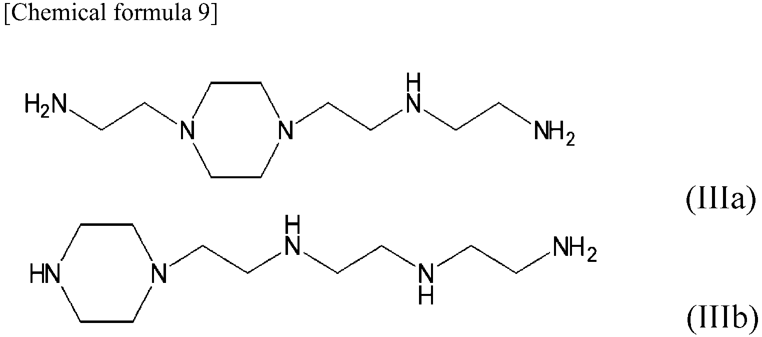 wherein the total amount of the amine compounds represented by the formulae (IIIa) and (IIIb) is 10.0% or more and 50.0% or less.

11. The heavy metal treatment agent according to claim 1, wherein the one or more amine compounds comprise an amine compound represented by the formula (II) in an amount of 5.0% or more and 30.0% or less.

12. The heavy metal treatment agent according to claim 1, wherein the dithiocarbamate is a sodium salt of dithiocarbamic acid.

13. The heavy metal treatment agent according to claim 1, comprising the component (A), the component (B), and the component (C).

14. The heavy metal treatment agent according to any one of claims 1 to 13, wherein the heavy metal treatment agent is for treating elements of groups 6 to 16 of the periodic table or compounds thereof.

15. A method for treating wastewater containing any one or more elements of groups 6 to 16 of the periodic table or compounds thereof, wherein the method comprises a step of adding the heavy metal treatment agent according to any one of claims 1 to 13 into a subject water solution.

16. The method for treating wastewater according to claim 15, wherein the method further comprises a step of adding a polymer flocculant and/or an inorganic flocculant into a subject water solution.

17. A method for treating incinerated ash containing any one or more elements of groups 6, 12 and 14 of the periodic table or compounds thereof, wherein the method comprises a step of adding the heavy metal treatment agent according to any one of claims 1 to 13 into the incinerated ash.

18. The method for treating incinerated ash according to claim 17, wherein an eluate of the incinerated ash of the experiment as set forth in Japan Environment Agency Notification No. 13 has a pH of 11.5 or more.
